(19) Europäisches Patentamt
European Patent Office
Office européen des brevets

(11) **EP 1 600 897 B1**

(12) **FASCICULE DE BREVET EUROPEEN**

(45) Date de publication et mention
de la délivrance du brevet:
**24.10.2012   Bulletin 2012/43**

(51) Int Cl.:
*G06T 17/20* (2006.01)          *G01V 1/30* (2006.01)
*E21B 43/00* (2006.01)

(21) Numéro de dépôt: **05291047.8**

(22) Date de dépôt: **13.05.2005**

(54) **Méthode pour générer un maillage hybride conforme en trois dimensions d'une formation hétérogène traversée par une ou plusieurs discontinuités géométriques dans le but de réaliser des simulations**

Verfahren zur Generierung eines hybriden 3D Netzes einer heterogenen, von einer geometrischen Diskontinuität durchzogenen Formation zur Realisierung von Simulationen

Method of generating a hybrid 3D grid a heterogenous formation crossed by a geometric discontinuity in order to carry out simulations

(84) Etats contractants désignés:
**AT DE FR GB NL**

(30) Priorité: **21.05.2004   FR 0405555**

(43) Date de publication de la demande:
**30.11.2005   Bulletin 2005/48**

(73) Titulaire: **Institut Français du Pétrole**
**92852 Rueil Malmaison Cedex (FR)**

(72) Inventeurs:
 • **Flandrin, Nicolas**
   **92000 Nanterre (FR)**
 • **Bennis, Chakib**
   **92500 Rueil-Malmaison (FR)**
 • **Borouchaki, Houman**
   **75015 Paris (FR)**
 • **Lemonnier, Patrick**
   **75015 Paris (FR)**

(56) Documents cités:
   EP-A- 1 394 569          US-A- 5 740 342
   US-A1- 2001 006 387     US-A1- 2002 038 201

 • **LIRA W M ET AL: "A modeling methodology for finite element mesh generation of multi-region models with parametric surfaces" COMPUTERS AND GRAPHICS, PERGAMON PRESS LTD. OXFORD, GB, vol. 26, no. 6, décembre 2002 (2002-12), pages 907-918, XP004417173 ISSN: 0097-8493**
 • **GEORGE P L ET AL: "An efficient algorithm for 3D adaptive meshing" ADVANCES IN ENGINEERING SOFTWARE, vol. 33, no. 7-10, juillet 2002 (2002-07), pages 377-387, XP002315645 ELSEVIER UK ISSN: 0965-9978**

**Description**

La présente invention concerne une méthode pour générer en trois dimensions un maillage hybride d'une formation hétérogène traversée par une ou plusieurs discontinuités géométriques, dans le but de réaliser par exemple des simulations d'écoulement.

La méthode s'applique particulièrement à la formation d'un maillage adapté à un gisement ou réservoir souterrain traversé par un ou plusieurs puits, ou par des fractures ou failles, dans le but d'y modéliser des déplacements de fluides tels que des hydrocarbures.

**Etat de la technique**

Au cours de l'exploitation d'un gisement d'hydrocarbure, il est impératif de pouvoir simuler des profils de production de gaz ou de pétrole, afin de juger de sa rentabilité, de valider ou d'optimiser la position des puits assurant le fonctionnement de l'exploitation. Il s'agit aussi d'estimer les répercutions d'une modification technologique ou stratégique sur la production d'un gisement (choix des emplacements des nouveaux puits à forer, optimisation et choix lors de la complétion des puits, ...). Pour cela, des calculs de simulations d'écoulement sont effectués au sein du réservoir. Elles permettent de prédire, en fonction de la position des puits et de certaines caractéristiques pétrophysiques du milieu, comme la porosité ou la perméabilité, l'évolution au cours du temps des proportions d'eau, de gaz et de pétrole dans le réservoir.

Tout d'abord, une meilleure compréhension de ces phénomènes physiques nécessite de simuler en 3D des écoulements polyphasiques dans des structures géologiques de plus en plus complexes, au voisinage de plusieurs types de singularités telles que les stratifications, les failles et les puits complexes. A cet effet, il est primordial de fournir aux schémas numériques un domaine d'étude correctement discrétisé. La génération de maillage adapté devient alors un élément crucial pour les simulateurs de réservoir pétrolier car il permet de décrire la géométrie de la structure géologique étudiée au moyen d'une représentation en éléments discrets. Cette complexité doit être prise en compte par le maillage qui doit restituer aussi fidèlement que possible la géologie et toutes ses hétérogénéités.

Par ailleurs, pour obtenir une simulation précise et réaliste, le maillage doit s'adapter aux directions radiales des écoulements au voisinage des puits, dans les zones de drainage.

Enfin, la modélisation de maillage a connu de grands progrès ces dernières années dans d'autres disciplines telles que l'aéronautique, la combustion dans les moteurs ou encore la mécanique des structures. Cependant les techniques de maillage utilisées dans ces autres domaines ne sont pas transposables telles quelles dans le monde pétrolier, car les contraintes de métier ne sont pas les mêmes. Les schémas numériques sont du type différences finies, ce qui nécessite l'utilisation de maillage cartésien trop simple pour décrire la complexité des hétérogénéités du sous-sol, ou, pour la plupart, du type éléments finis, qui sont adaptés à résoudre des problèmes elliptiques ou paraboliques et non à la résolution des équations hyperboliques comme celles obtenues pour la saturation. Les méthodes de type différences finies et éléments finis ne sont donc pas adaptées à la simulation de réservoir, seules les méthodes de type volumes finis le sont. Cette dernière est la méthode la plus utilisée en modélisation et simulation de réservoir. Elle consiste à discrétiser le domaine d'étude en volumes de contrôle sur chacun desquels les fonctions inconnues sont approchées par des fonctions constantes. Dans le cas des volumes finis centrés sur les mailles, les volumes de contrôle correspondent aux mailles et les points de discrétisation sont les centres de ces mailles. L'avantage de cette méthode est que la définition des volumes de contrôle se généralise sans problèmes à tous types de maillages, qu'ils soient structurés, non structurés ou hybrides. Par ailleurs, la méthode des volumes finis reste proche de la physique du problème et respecte le principe de la conservation de la masse (les bilans de masses des différentes phases sont écrits sur chaque maille). De plus, elle est particulièrement bien adaptée à la résolution d'équations non linéaires de type hyperbolique. Elle est donc toute indiquée pour la résolution du système hyperbolique en saturation. C'est pourquoi, nous nous baserons pour la suite sur l'utilisation de méthodes de volumes finis centrées sur les mailles.

En somme, le maillage permettant de réaliser des simulations réservoir doit être adapté :

- pour décrire la complexité de la géométrie de la structure géologique étudiée

- aux directions radiales des écoulements au voisinage des puits, dans les zones de drainage

- aux simulations par des méthodes de types volume finis centrées sur les mailles.

Les maillages proposés et utilisés jusqu'à nos jours dans le domaine pétrolier sont de trois types : entièrement structurés, totalement non structurés, ou hybride, c'est à dire un mélange de ces deux types de maillage.

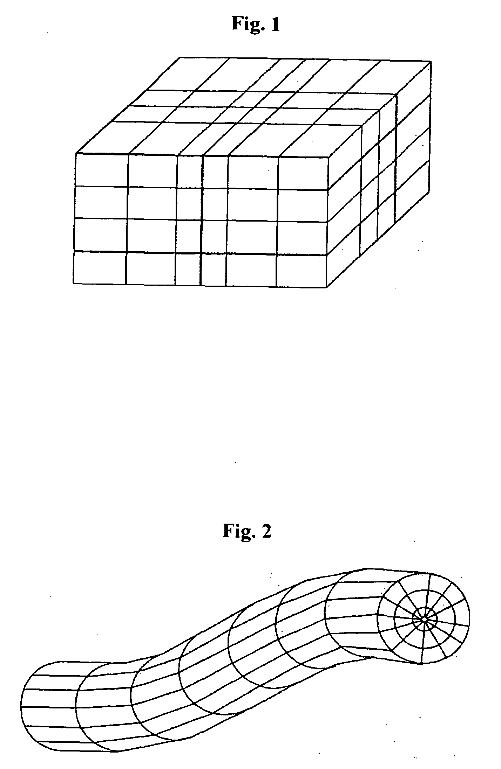

1. Les maillages structurés sont des maillages dont la topologie est fixe : chaque sommet interne est incident à un nombre fixé de mailles et chaque maille est délimitée par un nombre fixé de faces et d'arêtes. On peut citer par exemple les maillages cartésiens (figure 1), largement utilisés en simulation de réservoir, les maillages dit CPG (Comer-Point-Geometry), décrits par exemple dans le brevet FR 2 747 490 (US 5 844 564) du demandeur, et les maillages de type radial circulaire (figure 2), permettant de modéliser l'aire de drainage des puits.

2. Les maillages non structurés ont une topologie complètement arbitraire : un sommet du maillage peut appartenir à un nombre quelconque de mailles et chaque maille peut posséder un nombre quelconque d'arêtes ou de faces. Les données topologiques doivent donc être stockées en permanence pour connaître explicitement les voisins de chaque noeud. Le coût mémoire impliqué par l'utilisation d'un maillage non structuré peut donc devenir rapidement très pénalisant. Cependant, ils permettent de décrire la géométrie autour des puits et de représenter les zones géologiques complexes. On peut citer par exemple les maillages du type PErpendicular BIssector (PEBI) ou Voronoï proposés dans :

Z.E. Heinemann, G.F. Heinemann et B.M. Tranta, "Modelling heavily faulted reservoirs. ", Proceedings of SPE Annual Technical Conferences, pages 9-19, New Orlean, Louisiana, september 1998, SPE.

Les maillages structurés ont déjà montré leurs limites : leur caractère structuré facilite leur utilisation et leur exploitation mais ceci leur infère en même temps une rigidité ne permettant pas de représenter toutes les complexités géométriques de la géologie. Les maillages non structurés possèdent plus de souplesse et ont permis d'obtenir des résultats prometteurs mais ils sont encore 2,5D, c'est à dire que la 3$^{ième}$ dimension n'est obtenue que par projection verticale du résultat 2D, et leur manque de structure les rend plus difficiles à exploiter.

3. Pour allier les avantages des deux approches, structurée et déstructurée, tout en limitant leurs inconvénients, un autre type de maillage a été envisagé : le maillage hybride. Celui-ci est l'association de différents types de maillages et permet de profiter au maximum de leurs avantages, tout en essayant d'en limiter les inconvénients.

- Une méthode hybride de raffinement local a été proposée dans :

O.A. Pedrosa et K. Aziz, "Use of hybrid grid in reservoir simulation. ", Proceedings of SPE Middle East Oil Technical Conference, pages 99-112, Bahrain, March 1985.

Cette méthode consiste à modéliser une géométrie d'écoulement radiale autour d'un puits dans un maillage de réservoir de type cartésien. La jonction entre les mailles du réservoir et du puits est alors effectuée en utilisant des éléments de type hexaédrique. Cependant, la trajectoire verticale décrite par le centre du puits doit obligatoirement être située sur une ligne verticale de sommets du maillage cartésien réservoir.

- Pour élargir le champ d'application de cette méthode, pour prendre en compte les puits verticaux, horizontaux et les failles dans un maillage de réservoir de type cartésien, une nouvelle méthode hybride de raffinement local a été proposée dans :

S. Kocberber, "An automatic, unstructured control volume generation system for geologically complex reservoirs", Proceedings of the 14th SPE symposium on Reservoir Simulation, pages 241, 252, Dallas, june 1997.

Cette méthode consiste à joindre le maillage de réservoir et le maillage de puits, ou les blocs de maillage réservoir aux bords des failles, par des éléments de type pyramidaux, prismatiques, hexaédriques ou tétraédriques. Cependant, l'utilisation de mailles pyramidales ou tétraédriques ne permet pas d'utiliser une méthode de type volumes finis centrés sur les mailles.

- Enfin, par les brevets FR 2 802 324 et FR 2 801 710 du demandeur, on connaît un autre type de modèle hybride permettant de prendre en compte, en 2D et 2,5D, la géométrie complexe des réservoirs ainsi que les directions radiales des écoulements aux abords des puits. Ce modèle hybride permet de simuler de façon très précise le caractère radial des écoulements aux abords des puits par une méthode de type volumes finis centrés sur les mailles. Il est structuré presque partout, ce qui facilite son utilisation. La complexité inhérente au manque de structure n'est introduite que là où c'est strictement nécessaire, c'est-à-dire dans les zones de transition qui sont de tailles réduites. Les calculs sont rapides et la prise en compte des directions d'écoulement au travers la géométrie des puits augmente leur précision. Si ce maillage hybride 2,5D a permis de franchir un bon pas en avant en simulation de réservoir dans des géométries complexes, il n'en reste pas moins que cette solution ne permet pas d'obtenir une simulation tout à fait réaliste lorsque les phénomènes physiques modélisés sont réellement 3D. C'est le cas, par exemple, pour une simulation locale autours d'un puits.

De plus, ces techniques de constructions de maillages hybrides nécessitent la création d'une cavité entre le maillage de réservoir et le maillage de puits. On connaît par S. Balaven-Clermidy dans "Génération de maillages hybrides pour la simulation des réservoirs pétroliers" (thèse, Ecole des Mines de Paris, décembre 2001) différentes méthodes pour définir une cavité entre le maillage de puits et le maillage de réservoir : la cavité de taille minimale, (par simple désactivation des mailles du maillage de réservoir chevauchant le maillage du puits), la cavité obtenue par dilatation et la cavité dite de Gabriel. Cependant aucune de ces méthodes n'est réellement satisfaisante : l'espace créé par la cavité ne permet pas au maillage de transition de conserver une taille de maille intermédiaire entre les mailles de puits et les mailles de réservoir.

La méthode selon l'invention permet d'élargir le champ d'application des maillages hybrides. Elle consiste à étendre en trois dimensions leur processus de génération en proposant et en mettant en oeuvre de nouveaux algorithmes, robustes et efficaces. Il s'agit d'une part de proposer une nouvelle approche consistant à générer de manière entièrement automatique une cavité de taille minimale tout en permettant au maillage de transition de conserver une taille de maille intermédiaire entre la taille des mailles de puits et la taille des mailles de réservoir. Il s'agit également de construire un maillage de transition répondant aux contraintes du schéma numérique utilisé pour la simulation. Enfin, il s'agit de définir des critères permettant de mesurer la qualité du maillage, puis de proposer des méthodes d'optimisation, consistant à l'améliorer a posteriori, pour définir un maillage de transition parfaitement admissible au sens du schéma numérique choisi.

**La méthode selon l'invention**

L'invention concerne une méthode pour générer un maillage hybride adapté à un milieu hétérogène traversé par au moins une discontinuité géométrique, dans le but de former un modèle représentatif d'écoulements de fluides dans ce milieu en accord avec un schéma numérique défini. La méthode comporte la formation d'au moins un premier maillage structuré pour mailler au moins une partie du milieu hétérogène, la formation d'au moins un deuxième maillage structuré pour mailler au moins une partie de ladite discontinuité géométrique, la formation d'au moins une cavité autour du second maillage et la formation d'au moins un maillage de transition non structuré assurant la transition entre les maillages structurés. Cette méthode génère un maillage hybride en trois dimensions et elle comporte les étapes suivantes :

a) on construit ladite cavité permettant audit maillage de transition de conserver une taille de maille intermédiaire entre la taille des mailles dudit premier maillage et la taille dudit deuxième maillage en réalisant les étapes suivantes :

- on dilate ladite discontinuité géométrique par utilisation d'un coefficient de dilatation locale ($\alpha$) défini en fonction d'au moins un des paramètres suivants : paramètres de description de la discontinuité, paramètres de description dudit deuxième maillage et paramètres lié à la taille d'arête locale dudit premier maillage;

- on détermine les mailles dudit premier maillage qui intersectent l'image de ladite discontinuité géométrique dilatée ;

- on définit les limites de ladite cavité en affectant des sites à des quadrilatères frontières de la cavité ;

b) on construit ledit maillage de transition s'appuyant sur lesdits quadrilatères frontières de la cavité, en construisant une triangulation régulière respectant au moins une des contraintes d'admissibilité au sens dudit schéma suivantes : conformité, convexité, orthogonalité et auto-centrage de ces mailles ;

c) on optimise ledit maillage hybride obtenu, en réalisant au moins l'une des étapes suivantes:

- on supprime des petites arêtes de taille inférieure à une valeur dépendant d'au moins un paramètre global ($\delta$) et d'au moins un paramètre local ($h_i$), par suppression et/ou dilatation de ces arêtes sous contrôle de critères de qualité au sens dudit schéma numérique, pour améliorer la régularité en forme dudit maillage hybride;

- on déplace des sites de la cavité vers leur centre de masse sous contrôle de critères de qualité au sens dudit schéma numérique.

Les critères de qualité au sens dudit schéma numérique peuvent être des critères de qualités applicables à des mailles polyédriques, et les contrôles de ces critères de qualité peuvent être définis de la façon suivante :

- contrôle d'orthogonalité : une cellule de transition est dite orthogonale si son orthogonalité est supérieure ou égale à un seuil fixé.

- contrôle de planarité : une cellule de transition est dite planaire si sa planarité est inférieure ou égale à un seuil fixé.

- contrôle d'auto-centrage : une cellule est dite auto-centrée si son site est à l'intérieur de celle-ci.

On peut déterminer les mailles du premier maillage qui intersectent l'image de ladite discontinuité géométrique dilatée en déterminant une première cellule dudit premier maillage qui se trouve dans l'image de la discontinuité dilatée, puis en étendant la cavité en parcourant par adjacence ses mailles voisines de manière itérative. La première cellule peut être déterminée en utilisant une méthode de recherche par « bucket sorting ».

Selon l'invention, il peut être avantageux de lisser la cavité avant de définir ses limites.

La construction du maillage de transition peut comporter les étapes suivantes :

- on définit un site interne et un site externe pour chaque quadrilatère frontière de la cavité, en définissant un point de discrétisation de l'espace P et un poids $\omega$ pour chacun desdits sites ;

- on corrige les sites de ladite cavité de façon à obtenir, pour le maillage de transition, des cellules non-vides et auto-centrées ;

- on construit le diagramme de puissance desdits sites de la cavité en assurant la conformité dudit maillage hybride.

Les sites peuvent être définis à partir d'une triangulation de Delaunay des sommets de la cavité ou à partir d'une évaluation des barycentres des sphères circonscrites des mailles partageant au moins une face avec la frontière de ladite cavité. Les sites peuvent également être définis à partir d'une évaluation des centres des sphères circonscrites des mailles partageant au moins une face avec la frontière de ladite cavité. Dans ce cas, l'évaluation du centre de la sphère circonscrite peut comporter les étapes suivantes pour une maille partageant au moins une face avec la frontière de ladite cavité :

- on effectue une estimation du centre de la sphère de ladite maille en déterminant un point de l'espace passant au plus près des huit sommets de ladite maille, par une approximation au sens des moindres carrés ;

- on détermine le point de discrétisation P associé au site, en déplaçant itérativement dans l'espace ledit centre, pour minimiser une distance maximale entre ledit centre et chacun des sommets de la face de ladite maille partagée avec ladite cavité ;

- on définit le poids $\omega$ associé à chaque site de la cavité en définissant $\omega$ comme étant la distance moyenne de P à chacun des sommets de la face de ladite maille partagée avec ladite cavité.

Le diagramme de puissance des sites peut être construit à partir de tétraèdres issus d'une triangulation régulière en trois dimensions de l'ensemble des sites de la cavité.

Selon l'invention on peut corriger le diagramme de puissance afin d'obtenir un maillage hybride conforme en remplaçant les sommets des mailles du maillage de transition appartenant à une face frontière par le sommet de contrainte des quadrilatères frontières le plus proche.

La construction dudit diagramme de puissance peut comporter les étapes suivantes :

- on effectue une détermination de tétraèdres formés de sites internes et externes à la cavité ;

- on remplace, au cours de la construction dudit diagramme de puissance, les centres de sphères circonscrites à ces tétraèdres par un sommet de la cavité commun aux quadrilatères associés aux quatre sites formant le tétraèdre en question.

Selon l'invention, la triangulation de Delaunay et la triangulation régulière peuvent être réalisée par une méthode incrémentale.

Selon l'invention, le schéma numérique peut comporter une approximation des écoulements de fluides à deux points, comme par exemple un schéma numérique de type volumes finis.

Enfin, le premier maillage peut être de type cartésien non uniforme à mailles parallélépipédiques. Dans le cas où la discontinuité géométrique est un puits, le deuxième maillage structuré peut être de type radial circulaire. Si la discontinuité géométrique est une fracture, le deuxième maillage structuré peut être de type CPG. Quant au maillage non structuré de transition, il peut être composé de mailles polyédriques convexes s'appuyant sur des quadrilatères frontières de ladite cavité.

D'autres caractéristiques et avantages de la méthode selon l'invention, apparaîtront à la lecture de la description ci-après d'exemples non limitatifs de réalisations, en se référant aux figures annexées et décrites ci-après.

**Présentation succincte des figures**

- la figure 1 montre un maillage conforme de type cartésien non uniforme à mailles parallélépipédiques.

- la figure 2 montre un maillage de type radial circulaire en dimension 3.

- la figure 3A illustre la Delaunay admissibilité du maillage de réservoir.

- la figure 3B illustre à droite un maillage de puits Delaunay admissible, et à gauche un maillage de puits non Delaunay admissible.

- la figure 4 illustre une cavité minimale créée par la méthode selon l'invention ainsi que le maillage de transition qui y est généré.

- la figure 5A illustre les étapes 1 et 2 de l'algorithme permettant de trouver les deux tétraèdres s'appuyant sur la face $(A,B,C)$ du quadrilatère $Q$ : la recherche du $1^{er}$ tétraèdre s'appuyant sur la face $(A,B,C)$ en parcourant la boule de $A$ puis la coquille de $[AB]$.

- la figure 5B illustre l'étape 4b de l'algorithme permettant de trouver les deux tétraèdres s'appuyant sur la face $(A, B,C)$ du quadrilatère $Q$ : la recherche par adjacence du $2^{ème}$ tétraèdre s'appuyant sur la face $(A,B,C)$.

- La figure 5C illustre la manière avec laquelle les quatre tétraèdres s'appuyant sur le quadrilatère $Q$ sont déterminés lorsqu'un *sliver* a été détecté.

- la figure 6 illustre la topologie des sites de la cavité.

- la figure 7 illustre la détermination de la position d'un site dans le cas où le nombre de quadrilatères partagés par ce site est égal à 2 (à gauche) et égale à 1 (à droite).

- la figure 8 illustre la détermination du poids $\omega$ d'un site dans le cas où le nombre de quadrilatères partagés par ce site est égal à 2 (à gauche) et égale à 1 (à droite).

- la figure 9 illustre le déplacement d'un plan radical par déplacement d'un site et modification de son poids.

- la figure 10A illustre le diagramme de puissance en 2D issu d'une triangulation régulière (figure 10B).

- la figure 10B illustre une triangulation régulière.

- la figure 10C illustre la génération d'une face du diagramme de puissance en utilisant la dualité avec la triangulation régulière.

- la figure 11 illustre un exemple d'une cellule de transition rendue conforme par suppression de 5 sommets et de 3 faces.

- les figures 12A et12B illustrent le résultat de l'étape d'optimisation.

- la figure 13 illustre un maillage de transition obtenu selon la méthode de l'invention.

- la figure 14 illustre le résultat d'un maillage hybride généré à partir d'une grille uniforme et d'un puits vertical.

- la figure 15 illustre le résultat d'un maillage hybride généré à partir d'une grille non uniforme, d'un puits vertical et d'un puits oblique, en créant deux cavités et donc deux maillages de transition.

- la figure 16 illustre le résultat d'un maillage hybride généré à partir d'une grille non uniforme, de deux puits verticaux et d'un puits dévié, en créant deux cavités et donc deux maillages de transition.

- la figure 17 illustre la construction d'une maille virtuelle autour d'un puits pour définir les sites internes à la cavité.

- la figure 18 illustre le principe selon lequel les sommets de la cavité sont obtenus par les tétraèdres de la triangulation régulière formés par des sites internes et externes à la cavité.

**Description détaillée de la méthode**

La méthode selon l'invention permet de générer un maillage hybride 3D permettant la prise en compte de phénomènes physiques ayant lieu à proximité de discontinuités géométriques, comme des puits ou des fractures, lors des simulations de réservoir. Ce maillage est d'une part, adapté à la complexité de la géométrie de la structure géologique étudiée, et d'autre part, aux directions radiales des écoulements au voisinage des puits, dans les zones de drainage. Dans le domaine pétrolier, il est également nécessaire que ces maillages soient admissibles au sens des volumes finis. Pour respecter cette condition, le maillage doit posséder les propriétés suivantes :

- La discrétisation des équations des écoulements est réalisée par des approximations à deux points. Ceci implique que par une même face, une maille ne peut pas avoir plus d'une maille voisine. Cette propriété est connue sous le nom de **conformité.**

- Pour exprimer le gradient de pression suivant la normale à une face, une approximation à deux points entre les deux mailles adjacentes est utilisée (schémas numériques où l'approximation des flux est à deux points). Cela suppose que pour chaque maille, un centre de maille (ou point de discrétisation) doit être défini. Dès lors, une telle approximation n'est acceptable que si la droite joignant les centres de deux mailles adjacentes est orthogonale à leur face commune. Cette propriété est appelée **orthogonalité** du maillage.

- De la propriété précédente, il découle immédiatement que les mailles sont **convexes.**

- Bien qu'en théorie les points de discrétisations puissent être situés à l'extérieur de leur maille, la résolution des différentes inconnues du problème d'écoulement impose de les conserver dans leur maille. On parle alors de maille auto-centrée et de la propriété **d'auto-centrage** du maillage.

La méthode selon l'invention permet de générer un maillage hybride en 3 dimensions admissible au sens des volumes finis. Elle comporte quatre étapes majeures :

- Génération des maillages structurés de réservoir et de puits
- Définition automatique d'une cavité entre le maillage de réservoir et le maillage de puits
- Génération automatique d'un maillage de transition admissible
- Optimisation du maillage de transition sous contrôle de qualité et de validité au sens des volumes finis

**1. Génération des maillages structurés de réservoir et de puits**

Le réservoir est discrétisé par un maillage conforme et structuré de type cartésien non uniforme à mailles hexaédriques. Dans cet exemple non limitatif, ce maillage comporte des mailles parallélépipédiques de taille variable suivant les directions X, Y et Z. La figure 1 illustre ce type de maillage.

Les puits sont discrétisés par un maillage de type radial circulaire (figure 2). En trois dimensions, la génération d'un tel maillage s'effectue en deux étapes. La première consiste à discrétiser un disque couvrant l'aire de drainage du puits à l'aide de quadrilatères. La seconde étape consiste à extruder ce disque suivant la trajectoire du puits. Ce type de maillage a été introduit en simulation de réservoir pour modéliser l'aire de drainage des puits (que l'on appellera abusivement puits par la suite), où les gradients de vitesse sont élevés et les champs de vitesse sont radiaux. La géométrie du maillage reflète alors directement la géométrie des écoulements.

**2. Définition automatique d'une cavité entre le maillage de réservoir et le maillage de puits**

On suppose donnés un maillage de réservoir de type cartésien non uniforme et un maillage de puits de type radial circulaire. Pour faciliter la compréhension, on se limite au cas d'un puits unique sans restreindre l'invention.

Afin d'établir une connexion cohérente entre les maillages de puits et de réservoir, il est nécessaire, dans un premier temps, de désactiver un ensemble de mailles (dites mailles inactives) connexes du maillage de réservoir, de sorte qu'aucune maille du maillage du puits ne chevauche une maille du réservoir. Il sera alors possible de définir dans cette cavité ainsi définie, un maillage de transition reliant le réservoir au puits. La cavité représentant l'espace à couvrir par le maillage de transition doit respecter les deux propriétés suivantes :

- Taille minimale : du point de vue de la visualisation, de l'exploration ou encore de l'interprétation, il est préférable de limiter, dans un maillage hybride, la taille de la zone de transition, et donc de la cavité.

- Taille des mailles du maillage de transition : la cavité est amenée à être comblée de façon automatique par un maillage de transition dont les mailles doivent avoir une taille intermédiaire entre celle des mailles de puits et celle des mailles de réservoir. La taille d'une maille est définie, dans ce cadre, comme étant la taille locale des arrêtes de mailles. Cette propriété est liée au critère de qualité en forme défini ultérieurement.

Actuellement, aucune méthode ne permet de définir une cavité de façon réellement satisfaisante : l'espace créé ne permet pas au maillage de transition de conserver une taille de maille intermédiaire entre la taille des mailles de puits et celle des mailles de réservoir. La méthode selon l'invention propose une nouvelle approche consistant à générer de manière entièrement automatique une cavité qui réponde à ce critère. Elle peut se décomposer en quatre étapes principales :

- Dilatation du puits

- Définition de la cavité : recherche d'une première maille appartenant à la cavité puis expansion de la cavité

- Lissage de la cavité

- Définition des limites de la cavité

**• Dilatation du puits**

La première étape consiste à dilater automatiquement le puits. Pour cela, un coefficient de dilatation locale $\alpha$ (fonction de la taille locale des mailles de puits et de réservoir) est défini et le puits est dilaté en fonction de ce coefficient. L'ensemble des mailles du réservoir ayant une intersection non nulle avec l'image du puits dilaté est désactivé. La valeur du coefficient de dilatation $\alpha$ est défini par la formule suivante :

$$\alpha = 1 + \frac{\delta_{puits} + \delta_{réservoir}}{r}$$

où :

- $r$ est le rayon de drainage du puits,
- $\delta_{puits}$ est la taille d'arête locale du puits,
- $\delta_{réservoir}$ est la taille d'arête locale du réservoir.

L'image du puits dilaté est un puits de rayon $r + \delta_{puits} + \delta_{réservoir}$.

L'espace ainsi créé entre le puits et le réservoir $\delta$ est de taille suffisante pour assurer que les mailles du maillage de transition aient une taille intermédiaire entre celle des mailles de puits et celle des mailles de réservoir. Il s'écrit : $\delta = \alpha^* r - r = \delta_{puits} + \delta_{réservoir}$.

**• Définition de la cavité : recherche d'une première maille appartenant à la cavité puis expansion de la cavité**

Il n'existe pas de réelle difficulté pour construire la cavité ainsi définie par l'utilisation du coefficient $\alpha$. Il suffit en effet de rechercher de manière exhaustive toutes les mailles du réservoir présentes dans l'image du puits dilaté. Cependant, pour éviter une telle recherche, coûteuse en temps, on propose d'appliquer une méthode consistant à déterminer une première cellule du réservoir qui se trouve dans l'image du puits dilaté, puis d'étendre la cavité en parcourant par adjacence ses mailles voisines de manière itérative.

La recherche de la première maille présente dans la cavité pourrait se faire de manière exhaustive ou aléatoire. Cependant, l'utilisation de telles méthodes peut également être très coûteuse en temps CPU : si le réservoir est constitué de plusieurs centaines de milliers de mailles et que le puits inséré est petit, beaucoup trop de mailles peuvent être testées avant d'en trouver une présente dans l'image du puits dilaté. On propose donc d'utiliser une méthode très robuste et très rapide : la méthode de recherche par "bucket sorting" ou "bucketing" décrite par exemple dans :

P.J. Frey and P.L. George, "Maillages : applications aux éléments finis", Hermes, 1999.

Pour cela, on crée une grille régulière uniforme dans laquelle on insère les mailles du réservoir (ou plus exactement les centres des mailles). Ainsi, pour trouver la première maille du réservoir présente dans l'image du puits dilaté, il suffit de prendre un point du puits (par exemple un point de l'axe) et de déterminer la case *n* de la grille dans laquelle il se trouve. L'échantillonnage de la grille étant choisi plus grossier que celui du maillage du réservoir, il existe au moins une maille *c* du réservoir dans la case *n*. Cette maille *c* est alors la première maille du réservoir présente dans la cavité.

A cette étape de l'algorithme, la cavité n'est constituée que d'une seule maille *c*, trouvée en utilisant une recherche par bucketing. Pour trouver les autres mailles du réservoir qui intersectent l'image du puits dilaté, on peut utiliser le caractère structuré du maillage du réservoir pour parcourir par adjacence les mailles voisines de *c* de manière itérative. La cavité est alors initialisée par *c* puis, par voisinage, elle est complétée par incorporation de toute maille dont le barycentre est présent dans l'image du puits dilaté. Un coloriage dynamique des mailles déjà parcourues est alors utilisé afin de ne jamais parcourir plusieurs fois une même maille et par suite, d'assurer la convergence de l'algorithme. Une maille du réservoir *n* appartient à la cavité si et seulement si :

$$\text{dist}(G_n, axe) \leq r + \delta_n + \delta_{puits}$$

où

    *r* est le rayon du puits,
    $\delta_n$ est la taille d'arête maximale de n,
    $\delta_{puits}$ est la taille d'arête maximale du puits et
    $\text{dist}(G_n, axe)$ est la distance minimale entre le barycentre de *n* et l'axe du puits.

**• Lissage de la cavité**

L'invention comporte alors une étape permettant de lisser la frontière de la cavité, afin que le maillage de transition généré ultérieurement soit le plus uniforme possible. Les mailles du réservoir ayant une intersection non nulle avec l'image du puits dilaté ont toutes été désactivées pour définir cette cavité. Cependant, il se peut que certaines mailles inactives du réservoir soient adjacentes à cinq autres mailles actives. Cela correspond en fait à des mailles dont l'appartenance à la cavité est vraie à epsilon (distance très faible, proche de zéro) près. Elles doivent donc être réactivées. Il faut également réaliser l'opération inverse lorsqu'une maille active du réservoir est adjacente à cinq autres mailles inactives. La conséquence directe de cet ajustement est un "lissage" de la cavité et donc une uniformisation de l'espace à couvrir par le maillage de transition.

**• Définition des limites de la cavité**

Finalement, la frontière de la cavité, aussi bien au niveau du puits qu'au niveau du réservoir, est définie en affectant des sites aux quadrilatères frontières de la cavité. On appelle site, un point pondéré, c'est-à-dire l'association d'un point de discrétisation de l'espace *P* et d'un poids $\omega$. Selon la méthode un site interne correspond également au centre d'une cellule de puissance, c'est à dire au centre d'une maille du maillage de transition. Ainsi le point de discrétisation *P* est une point sur lequel les valeurs pétrophysiques sont assignées ou calculées. Le maillage de transition a pour vocation de joindre le maillage de puits et le maillage de réservoir de telle sorte que le maillage global soit conforme. De ce fait, le maillage de transition doit scrupuleusement respecter les quadrilatères frontières des maillages initiaux, situés sur le pourtour de la cavité. Ces quadrilatères et leurs extrémités composent alors un ensemble de contraintes géométriques à respecter. Les manières de déterminer les contraintes géométriques du réservoir et du puits sont très similaires. La procédure permettant d'extraire les quadrilatères frontières de la cavité, tout en définissant la topologie des sites qui permettront d'obtenir un maillage de transition les respectant, est donc décrite ici uniquement dans le cadre du réservoir. Pour construire une cellule de puissance s'appuyant sur un quadrilatère frontière de la cavité, il faut définir un site de part et d'autre de celui-ci : un site interne et un site externe à la cavité. On propose donc de définir les quadrilatères frontières de la cavité en parcourant par adjacence les mailles inactives du réservoir. Un quadrilatère frontière est alors formé à chaque fois qu'une maille inactive est adjacente à une maille active. Il est alors identifié à la face départageant ces deux mailles. Parallèlement à cette tâche, la topologie des sites est définie. Un site interne à la cavité est alors créé lorsqu'une maille inactive est adjacente à une ou plusieurs mailles actives. Le nombre de mailles actives partagées par ce site et les indices des quadrilatères formés par ces mailles sont alors stockés. De la même manière, les sites externes à la cavité sont créés en considérant les mailles actives adjacentes à des mailles inactives.

Ce nombre restreint de faces quadrangulaires qui, d'une part, appartient aux maillages à connecter et d'autre part, délimite les frontières du maillage à générer, doivent se retrouver telles quelles (ni modifiées, ni divisées) dans le maillage de transition afin d'obtenir un maillage global conforme. Ces faces quadrangulaires sont appelées quadrilatères de contrainte.

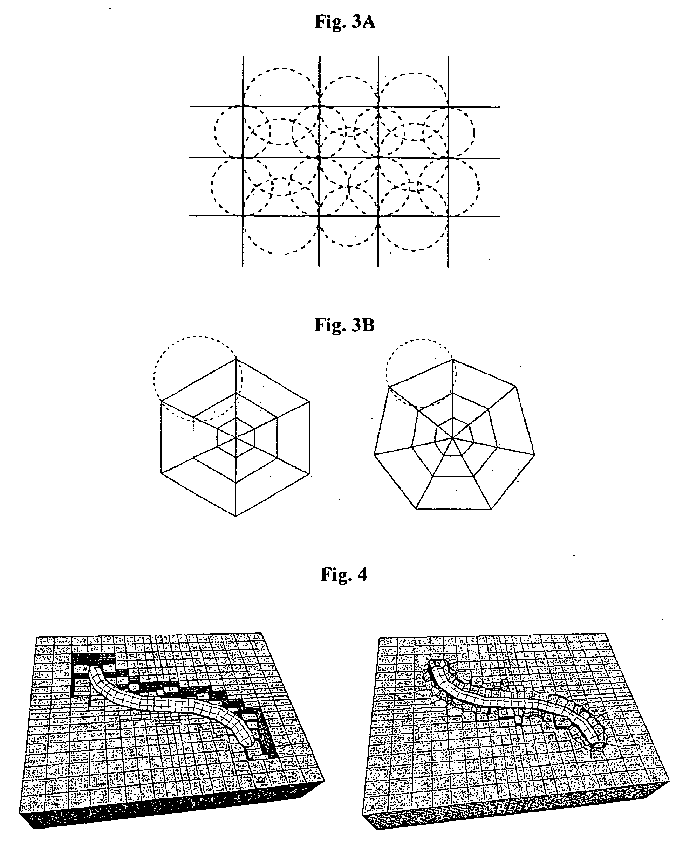

La figure 4 illustre une cavité obtenue en utilisant cette méthode ainsi que le maillage de transition qui y est généré. On remarque que l'espace créé permet au maillage de transition de conserver une taille de maille intermédiaire entre la taille des mailles de puits et celle des mailles de réservoir.

### 3. Génération automatique d'un maillage de transition admissible

L'étape suivante consiste à construire de façon automatique un maillage non structuré s'appuyant exactement sur les quadrilatères de contrainte de la cavité, et dont les éléments respectent les contraintes d'admissibilité au sens des volumes finis (contraintes de conformité, de convexité, d'orthogonalité et d'auto-centrage) de telle sorte que le maillage hybride global soit conforme. Ce maillage non structuré doit donc être composé de mailles polyédriques convexes qui s'appuient sur les quadrilatères frontières de la cavité.

La méthode que l'on propose est basée sur la construction d'une triangulation régulière. Cette méthode peut être décomposée sous la forme d'une succession de 3 étapes :

- La définition des sites

- La correction des sites

- La construction du diagramme de puissance des sites

#### • La définition des sites

Le but est ici de définir la position et le poids des sites internes et externes à la cavité de telle manière que le diagramme de puissance correspondant soit conforme aux quadrilatères frontières de la cavité. Le choix des sites de la cavité nécessite une attention toute particulière car la génération d'un maillage de transition conforme, orthogonal et auto-centré en dépend.

Premier mode de réalisation : la triangulation de Delaunay

Selon un premier mode de réalisation, la méthode est basée sur la construction d'une triangulation de Delaunay des sommets de la cavité pour définir les sites de la cavité. Cette triangulation doit être conforme aux contraintes de la cavité formées de quadrilatères. Pour cela, il est nécessaire d'assurer que chaque face de la cavité est Delaunay admissible, c'est à dire que les faces frontières de la cavité fassent partie de la triangulation de Delaunay des sommets de la cavité. La cavité est dite "Delaunay admissible" si la sphère diamétrale de chaque arête des mailles du réservoir est vide de tout sommet du puits et si la sphère diamétrale de chaque arête des mailles du puits est vide de tout sommet du réservoir (notion de cavité de Gabriel). Les figures 3A et 3B illustrent la Delaunay admissibilité, respectivement du maillage de réservoir et du maillage de puits. La figure 3B illustre à droite un maillage Delaunay admissible, et à gauche un maillage non Delaunay admissible. Il faut noter que la définition de la cavité, telle que définie par l'invention, assure sa Delaunay admissibilité.

La triangulation de Delaunay des sommets de la cavité est réalisée par une méthode incrémentale réduite, telle que décrite dans l'ouvrage suivant :

P.L. George et H. Borouchaki, "Triangulation de Delaunay et maillage", Hermes, 1997.

Cette méthode consiste à trianguler dans un premier temps la boîte englobante de la cavité en 5 tétraèdres. Puis chaque point est inséré dans la triangulation de façon incrémentale. Une triangulation de l'enveloppe de la cavité est alors déduite de ce qui précède en supprimant tous les tétraèdres dont l'un au moins des sommets est un sommet de la boîte englobante. La cavité étant Delaunay admissible, les faces de celle-ci (ou plus exactement les deux triangles découpant chaque face quadrangulaire de la cavité) appartiennent à des tétraèdres de cette triangulation (au maximum 4). L'étape suivante est de les identifier.

La seconde étape est donc la recherche des tétraèdres de Delaunay s'appuyant sur les quadrilatères de la cavité. Quelques définitions sont nécessaires avant d'aborder la méthode utilisée :

*Boule :* Soit $P$ un sommet d'un maillage, la boule associée à $P$ est l'ensemble des éléments ayant $P$ comme sommet.
*Coquille :* Soit $e$ une arête d'un maillage, la coquille associée à $e$ est l'ensemble des éléments partageant cette arête.
Soit un quadrilatère $Q$ défini par ses quatre sommets : $A, B, C$ et $D$. La recherche des tétraèdres $T_{1in}$, $T_{2in}$, $T_{1out}$, $T_{2out}$ qui s'appuient sur le quadrilatère $Q$ et qui sont respectivement à l'intérieur (*in*) et à l'extérieur (*out*) de la cavité, se fait de la manière suivante :

1. On parcourt la boule du sommet A pour trouver un tétraèdre $T_0$ partageant l'arête $[AB]$.
2. On parcourt la coquille de l'arête $[AB]$ pour trouver un tétraèdre $T_1$ partageant la face triangulaire $(A,B,C)$ ou $(A,B,D)$. On note $f$ cette face triangulaire, $e_A$ l'arête de $f$ opposée au sommet $A$ et $i$ le sommet du tétraèdre $T_1$ tel que $i \notin f$.
3. Si $i$ est également un sommet du quadrilatère $Q$, le tétraèdre récupéré est un *sliver* (tétraèdre de volume pratiquement nul formé à partir de quatre points cocycliques). Dans ce cas, les quatre tétraèdres recherchés sont les quatre tétraèdres voisins à $T_1$ : deux d'entres eux sont internes à la cavité et les deux autres sont externes.
4. Sinon, le tétraèdre $T_1$ est un des tétraèdres recherchés : si $T_1$ est interne à la cavité alors $T_{1in} = T_1$ sinon $T_{1out} = T_1$. La recherche du tétraèdre $T_2$ voisin à $T_1$ et opposé au sommet $i$ permet alors de déterminer le tétraèdre complémentaire :

   (a) Si $T_2$ est un *sliver,* les quatre tétraèdres recherchés sont les quatre tétraèdres voisins à $T_2$.
   (b) Sinon, si $T_1$ était interne à la cavité alors $T_{1out} = T_2$ sinon $T_{1in} = T_2$.

5. Si 4.(b), on parcourt la coquille de l'arête $e_A$ pour trouver un tétraèdre $T_3$ s'appuyant sur le quatrième sommet du quadrilatère $Q$.
6. Si $T_3$ est un *sliver,* les tétraèdres recherchés sont les quatre tétraèdres voisins à $T_3$.
7. Sinon, le tétraèdre $T_3$ est un des tétraèdres recherchés : si $T_3$ est interne à la cavité alors $T_{2in} = T_3$ sinon $T_{2out} = T_3$. La recherche du tétraèdre $T_4$ voisin à $T_3$ et opposé au quadrilatère Q permet alors de déterminer le tétraèdre complémentaire :

   (a) Si $T_4$ est un *sliver,* les tétraèdres recherchés sont les quatre tétraèdres voisins à $T_3$.
   (b) Sinon, si $T_3$ était interne à la cavité alors $T_{2out} = T_4$ sinon $T_{2in} = T_4$.

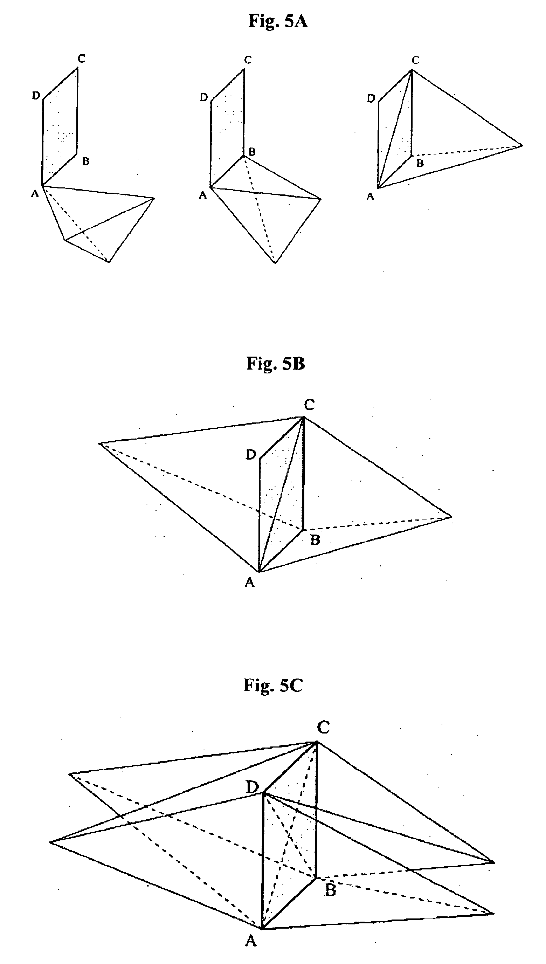

Les figures 5A et 5B illustrent les différentes étapes de l'algorithme permettant de trouver les deux tétraèdres s'appuyant sur la face $(A,B,C)$ du quadrilatère $Q$. La figure 5A illustre les étapes 1 et 2, c'est à dire la recherche du 1 er tétraèdre s'appuyant sur la face $(A,B,C)$ en parcourant la boule de $A$ puis la coquille de $[AB]$. La figure 5B illustre l'étape 4b : la recherche par adjacence du 2ème tétraèdre s'appuyant sur la face (A,B,C). De même, la figure 5C illustre la manière avec laquelle les quatre tétraèdres s'appuyant sur le quadrilatère $Q$ sont déterminés lorsqu'un *sliver* a été détecté.

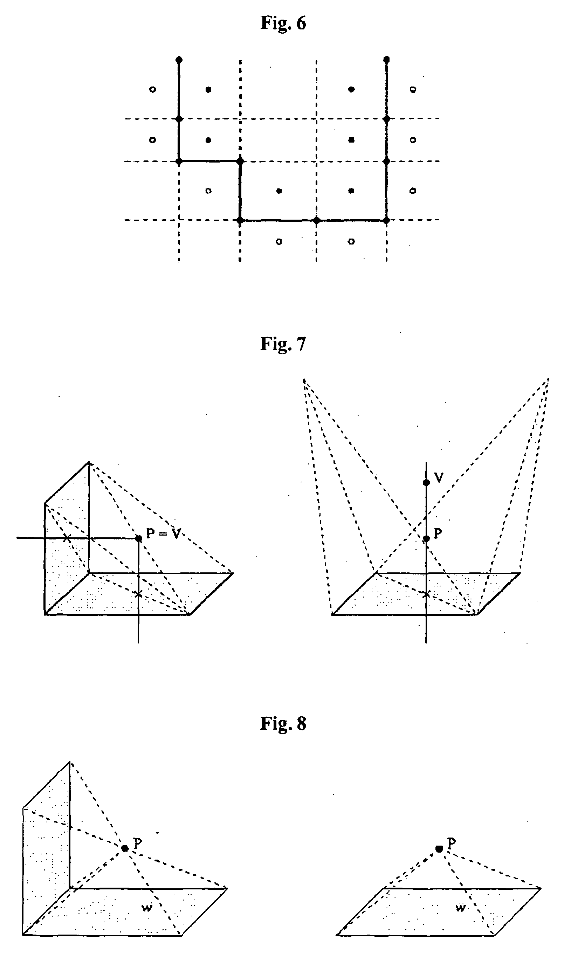

Enfin, après la recherche des tétraèdres de Delaunay s'appuyant sur les quadrilatères de la cavité, la dernière étape de la construction de ces sites consiste à définir le positionnement des sites, de façon à ce que le diagramme de puissance correspondant soit conforme. La méthode se base sur la topologie des sites illustrée figure 6 : chaque site est partagé par un ou plusieurs quadrilatères et chaque quadrilatère est partagé par plusieurs tétraèdres. Les choix des sites internes et externes sont quelque peu différents :

A)- Positionnement des sites internes

Soit un site $\rho$, interne à la cavité, dont la position est recherchée. Soit $Q_{i=1..n}$ l'ensemble des quadrilatères partagés par $\rho$ et soit $n$ la taille de cet ensemble. Le but est de déterminer les coordonnés spatiales de $\rho$ définies par le point $P(x, y, z)$ ainsi que son poids $\omega$ pour que le maillage de transition obtenu soit conforme.

Détermination de $P(x, y, z)$

Deux cas se présentent pour déterminer $P(x, y, z)$ : soit le site $\rho$ est partagé par un seul quadrilatère, soit il est partagé par plusieurs quadrilatères (au maximum quatre). Une discussion est alors faite sur la valeur de $n$ :

- si $n > 1$, le calcul de $P$ se fait très rapidement : $P$ est identifié à $V$, le site de Voronoï associé aux quadrilatères $Q_{i=1..n}$, qui est l'unique point de rencontre des arêtes duales de $Q_{i=1..n}$. Le diagramme de Voronoï étant le dual de la triangulation de Delaunay, $V$ est obtenu en calculant le barycentre des centres des sphères circonscrites aux $m$ tétraèdres s'appuyant sur les quadrilatères $Q_{i=1..n}$ :

$$V = \frac{\sum_{i=1}^{m} O_i}{m}$$

où les $O_i$ sont les centres des sphères circonscrites à ces tétraèdres.

- si $n = 1$, le calcul de $P$ est légèrement plus compliqué : $P$ est déterminé en calculant le point milieu du segment $[OV]$, $O$ étant le centre du cercle circonscrit au quadrilatère associé à $\rho$. Par expérience, nous avons noté que cette position donnait de bons résultats. Le centre du cercle circonscrit à un quadrilatère $Q$ est le point situé à égale distance des sommets de $Q$. Si $Q$ est cocyclique et rectangulaire, le centre de son cercle circonscrit est donné par le barycentre de ses sommets. Par contre, si $Q$ est quelconque (ce qui arrive lorsque le puits est dévié), le centre de son cercle circonscrit est approximé ; il est alors donné par la relation :

$$O = \frac{O_{ABC} + O_{BCD} + O_{ABD} + O_{BDC}}{4}$$

où $A$, $B$, $C$ et $D$ sont les sommets du quadrilatère et $O_{ABC}$, $O_{BCD}$, $O_{ABD}$ et $O_{BDC}$ sont les centres des cercles circonscrits aux triangles correspondants.

Dans la pratique seule cette formule est utilisée dans la mesure où elle reste valable dans le cas où $Q$ est cocyclique et rectangulaire.

La figure 7 illustre la détermination des points $P(x, y, z)$ dans ces 2 cas : dans le cas où le nombre de quadrilatères partagés par un site est égal à 2, la détermination de la position de ce site est illustré à gauche et dans le cas on ce nombre est égal à 1, la détermination de la position est illustrée à droite.

Détermination de $\omega$

Le poids $\omega$ représente le rayon de la sphère de centre $P$ passant par ses $s$ sommets de contrainte $A_{i=1..s}$. Ainsi, si les quadrilatères de contrainte associés à $\rho$ sont cocycliques, $P$ est situé exactement à égale distance de ses sommets de contrainte ; $\omega$ est alors défini de manière exacte en calculant la distance de $P$ au sommet de contrainte $A_1$. Par contre, dans le cas contraire, $\omega$ doit être approximé ; il est alors déterminé en calculant la distance moyenne de $P$ à ses $s$ sommets de contrainte :

$$\omega = \frac{\sum_{i=1}^{s} \left\| \overrightarrow{PA_i} \right\|}{s}$$

Dans la pratique seule cette formule est utilisée dans la mesure où elle reste valable dans tous les cas.

La figure 8 illustre la détermination du poids $\omega$, dans le cas où le site partage 2 quadrilatères de contrainte à gauche, et un seul à droite.

B)- Positionnement des sites externes

La méthode utilisée pour déterminer les sites externes à la cavité est quelque peu différente de la méthode décrite précédemment. En effet, si le nombre de quadrilatères partagés par le site est égal à un, il se peut que ce quadrilatère soit sur l'enveloppe convexe de la cavité. Dans ce cas, aucun tétraèdre de la triangulation de Delaunay ne s'appuie sur la face externe du quadrilatère. Le site externe est alors obtenu par symétrie du site interne par rapport au centre du cercle circonscrit au quadrilatère :

$$\begin{cases} P = P^{\cdot} + 2\overrightarrow{P^{\cdot}O} \\ \omega = \omega' \end{cases},$$

où $(P, \omega)$ est le site externe, $(P', \omega')$ est le site interne à la cavité et $O$ est le centre du cercle circonscrit au quadrilatère.

Dans toutes les autres situations, la méthode décrite dans le cas du positionnement des sites internes reste valide.

Second mode de réalisation : barycentre ou centre de la sphère circonscrite à un hexaèdre

Dans le premier mode de réalisation, une triangulation de Delaunay des sommets de la cavité est utilisée pour positionner les sites nécessaires à la construction d'un diagramme de puissance conforme entre les maillages du puits et du réservoir. Les sites sont définis sur les arêtes duales des faces de la cavité ce qui leur permet d'être situés à égale distance des sommets des faces quadrilatérales associées. Cette distance est différente pour chaque site et est fonction de l'espace présent entre la frontière du puits et celle du réservoir qui est donné localement par les simplexes de la triangulation.

Cependant, la taille de la cavité étant connue et maîtrisée, on peut définir directement chaque site de la cavité de façon à ce que la distance entre un site et chacun des sommets des faces de contrainte associées soit la même. La méthode tire profit de la taille de la cavité : $\delta = \delta_{puits} + \delta_{réservoir}$

A)- Détermination de $P(x, y, z)$

Choix des sites associés au réservoir

Soit $S_R$ l'ensemble des mailles du maillage de réservoir partageant au moins une face avec la frontière de la cavité, alors :

- pour chaque maille inactive de $S_R$, on définit un site interne à la cavité qui est le barycentre ou le centre de la sphère circonscrite à cette maille ;
- pour chaque maille active $S_R$, on définit un site externe à la cavité qui est le barycentre ou le centre de la sphère circonscrite à cette maille.

Choix des sites associés au puits

On utilise ici un raisonnement similaire. Soit donc $S_P$ l'ensemble des mailles du maillage de puits partageant au moins une face avec la frontière de la cavité, alors, pour chaque maille active de $S_P$ :

- on définit un site externe à la cavité qui est le barycentre ou le centre de la sphère circonscrite à cette maille ;

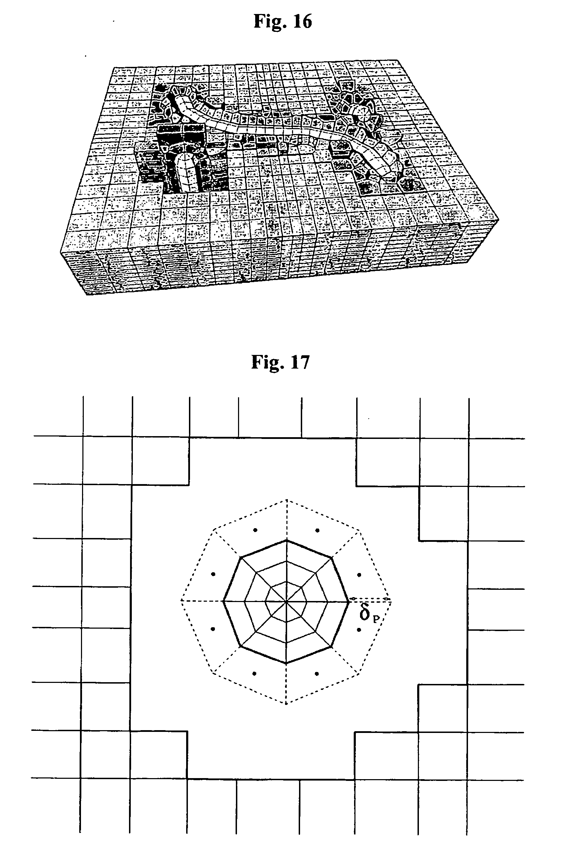

- on construit une maille virtuelle en ajoutant autour du puits une couche de mailles supplémentaire de taille $\delta_{Puits}$, où $\delta_{Puits}$ est la taille d'arête locale du puits. Un site interne à la cavité est alors défini par le barycentre ou le centre de la sphère circonscrite à cette maille virtuelle (figure 17).

Rassemblement des sites

L'ensemble des sites nécessaires à la construction du diagramme de puissance est obtenu en rassemblant tous les sites internes et externes à la cavité définis au niveau du réservoir et au niveau du puits. Les sites internes à la cavité seront les centres des cellules du diagramme de puissance et les sites externes à la cavité permettront d'assurer leur conformité avec la frontière de la cavité.

B)- Détermination de $\omega$

On note que chaque site (interne ou externe) est associé à une ou plusieurs faces de la cavité appelé(e)s face(s) de contrainte associée(s) au site et que chaque face de la cavité est toujours associée à deux sites : un site interne et un site externe à la cavité. Par ailleurs, le poids $\omega$ de chaque site $(P, \omega)$ est égal à la distance moyenne de $P$ aux sommets de sa (ou ses) face(s) de contrainte.

Le barycentre de la sphère circonscrite se calcul en sommant les huit sommets de la maille hexaédrique considérée. Pour le centre, le calcul est plus complexe et une méthode pour définir ces centres est proposée ci-après.

C)- Évaluation du centre de la sphère circonscrite à un hexaèdre

On décrit ici la définition du centre de la sphère circonscrite à une maille hexaédrique quelconque à l'aide d'un calcul de distance et de la résolution du système linéaire associé, par une approximation au sens des moindres carrés (le centre de la sphère circonscrite à une maille hexaédrique parallélépipédique étant égal au point milieu d'une des grandes diagonales de la maille).

Soient $P_i$ ($i = 1...8$) les 8 sommets d'une maille hexaédrique quelconque. On cherche à définir la sphère de centre $P$ qui passe au plus près des 8 sommets de cette maille.

En exprimant la distance entre $P$ et $P_1$ et en imposant que cette distance doit être égale à celle entre $P$ et chacun de 7 autres sommets $P_i$ ($i = 2...8$), on obtient la relation suivante :

$$\left\| \overrightarrow{PP_1} \right\| = \left\| \overrightarrow{PP_i} \right\|$$

$$\sqrt{\overrightarrow{PP_1} \cdot \overrightarrow{PP_1}} = \sqrt{\overrightarrow{PP_i} \cdot \overrightarrow{PP_i}}$$

ou encore, en développant et en élevant le tout au carré :

$$(x_i - x_1)\, x + (y_i - y_1)\, y + (z_i - z_1)\, z = \frac{(x_i^2 - x_1^2) + (z_i^2 - z_1^2) + (z_i^2 - z_1^2)}{2}$$

avec les notations :

$$P_i = \begin{pmatrix} x_i \\ y_i \\ z_i \end{pmatrix} \quad \text{et} \quad P = \begin{pmatrix} x \\ y \\ z \end{pmatrix}.$$

On a alors un système sur-déterminé de la forme :

$$A \cdot P = B$$

où $A$ est une matrice ($7 \times 3$) fonction de ($x_i, y_i, z_i$) et $B$ un vecteur à 7 lignes :

$$A = \begin{pmatrix} (x_2 - x_1)\, x & (y_2 - y_1)\, y & (z_2 - z_1)\, z \\ \vdots & \vdots & \vdots \\ (x_8 - x_1)\, x & (y_8 - y_1)\, y & (z_8 - z_1)\, z \end{pmatrix}$$

$$B = \frac{1}{2} \begin{pmatrix} (x_2^2 - x_1^2) + (y_2^2 - y_1^2) + (z_2^2 - z_1^2) \\ \vdots \\ (x_8^2 - x_1^2) + (y_8^2 - y_1^2) + (z_8^2 - z_1^2) \end{pmatrix}$$

Pour résoudre un tel système sur-déterminé et tenter de satisfaire toutes les équations simultanément (ce qui est impossible dans le cas général), on utilise une approximation au sens des moindres carrés, c'est-à-dire qu'on essaie de minimiser l'écart entre les vecteurs $A.P$ et $B$ de $\mathfrak{R}^6$ en minimisant le carré de la norme euclidienne de leur différence. La formule générale pour approcher cette solution consiste à obtenir un système bien déterminé (de 3 équations à 3 inconnues) en multipliant l'expression précédente à gauche par $^tA$ :

$$^tA \cdot A \cdot P = {}^tA \cdot B$$

Ce système est alors résolu par une méthode classique, par exemple celle du pivot de Gauss. Le point $P$ ainsi trouvé est le centre de la sphère qui passe au plus près des 8 sommets de la maille hexaédrique considérée.

D)- Ajustement des sites

Chaque site construit à partir d'une maille hexaédrique quelconque est le barycentre ou le centre de la sphère qui passe au plus près des 8 sommets de cette maille. Sa distance vis à vis de ces 8 sommets n'est donc pas la même ce qui peut, dans certains cas, poser des problèmes de conformité importants. Or, on sait que chaque site est associé à une ou plusieurs faces de la cavité et que, pour être conforme, celui-ci doit être situé à égale distance des sommets (au nombre de 4 à 8) de cette ou de ces faces. On propose donc de bouger itérativement ce site dans l'espace pour minimiser l'écart maximal entre les distances de ce site à chacun de ces sommets de contrainte.

Soit $(P, \omega)$ un site donné et soient $P_1$, $P_2$, $P_3$ et $P_4$ les sommets de la face quadrilatérale associée, l'algorithme "de bougé" consiste à :

1. Calculer la distance moyenne $l_{moy}$ de $P$ à chacun des sommets $P_i$ :

$$l_{moy} = \frac{\sum_{i=1}^{4} \left\| \overrightarrow{P_i P} \right\|}{4}$$

2. Définir le point $Q$ de coordonnées $x_Q$, $y_Q$ et $z_Q$, tel que :

$$Q = \frac{\sum_{i=1}^{4} \left( P_i + l_{moy} \frac{\overrightarrow{P_i P}}{\left\| \overrightarrow{P_i P} \right\|} \right)}{4}$$

3. Si $Q$ est différent de $P$ (c'est-à-dire si $|x_Q - x| > \varepsilon$ ou $|y_Q - y| > \varepsilon$ ou $|z_Q - z| > \varepsilon$ où $\varepsilon$ est la précision souhaitée), remplacer $P$ par $Q$ et aller en 2.

A la convergence de l'algorithme, le site $(P, \omega)$ a atteint une position d'équilibre. En remplaçant $P$ par le point $Q$ et en définissant $\omega$ comme étant la distance moyenne de $P$ à chaque sommet $P_i$, on minimise encore un peu plus les problèmes de conformité abordés ultérieurement.

**• La correction des sites**

La deuxième étape de la construction automatique du maillage de transition consiste à corriger la position de certains sites via la correction de leur poids, afin de garantir que les cellules du diagramme de puissance des sites sont des cellules non vides et auto-centrées. Pour cela, l'interaction mutuelle des sites est considérée et un algorithme dit de "correction" est proposé.

Un ensemble de sites internes et externes à la cavité garantissant l'existence d'un diagramme de puissance conforme aux quadrilatères de contrainte a été défini. Cependant, bien qu'un tel diagramme satisfasse les conditions d'orthogonalité et de convexité relatives aux volumes finis, on ne peut pas assurer que chaque cellule est non vide et auto-centrée. En effet, un site peut très bien être en dehors de sa cellule ou bien, ce qui est encore plus grave, un site peut ne pas avoir de cellule. Cela est du à la définition des sites qui a été faite de manière indépendante. Chaque site a été déterminé en fonction de ses quadrilatères de contrainte sans tenir compte de son interaction avec les autres sites. Or, pour garantir la construction d'un diagramme de puissance qui est constitué de cellules non vides et qui est auto-centré, nous devons prendre en compte cette interaction mutuelle des sites.

La condition géométrique traduisant que deux sites sont admissibles au sens des volumes finis peut être définie de la façon suivante : soient deux sites $(P_i, \omega_i)$ et $(P_j, \omega_j)$ et soit $\Gamma_{ij}$ leur plan radical, c'est-à-dire le lieu d'égale puissance de $P_i$ et de $P_j$. La condition géométrique traduisant que ces deux sites sont situés de part et d'autre de $\Gamma_{ij}$ et donc, que les cellules du diagramme de puissance qui en découle sont autocentrées, peut s'exprimer de la façon suivante :

$$\left| \omega_i^2 - \omega_j^2 \right| \leq \left\| \overrightarrow{P_i P_j} \right\|^2$$

Cette condition est la condition nécessaire et suffisante exprimant que le plan radical $\Gamma_{ij}$ coupe le segment $[P_iP_j]$.

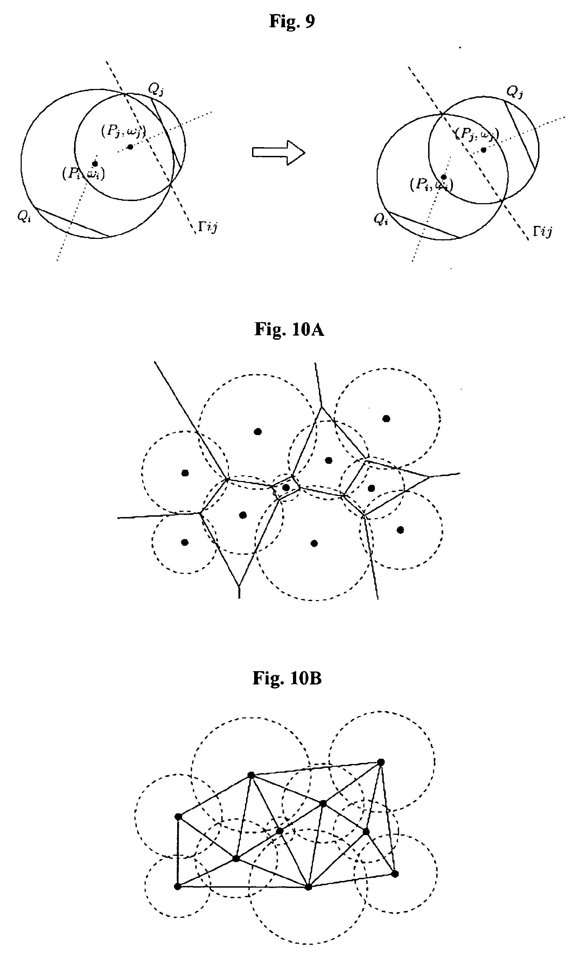

- La correction de deux sites non admissible au sens des volumes finis peut s'envisager de deux façons différentes. La première consiste à modifier le poids d'un des sites, c'est à dire modifier le rayon du cercle associé à ce site. La seconde possibilité permettant de déplacer le plan radical, consiste simplement à déplacer le site. En effet, déplacer un site modifie la position de l'intersection des sphères associées aux sites et ainsi la position du plan radical. Cependant, le poids d'un site est lié à sa position. En effet, le poids $\omega$ d'un site, localisé au point $P$, est tel que $\omega$ correspond à la distance moyenne entre P et les extrémités du (ou des) quadrilatère(s) de contrainte associés au site. La puissance d'un site ne peut donc pas être modifiée sans le déplacer, et réciproquement. La méthode selon l'invention propose d'opérer une combinaison de ces deux manières de procéder (figure 9) :

Soient deux sites $\rho_i(P_i, \omega_i)$ et $\rho_j(P_j, \omega_j)$ situés du même côté de leur plan radical $\Gamma_{ij}$. Pour que le plan radical $\Gamma_{ij}$ soit situé entre les sites $\rho_i$ et $\rho_j$, la position de l'un des deux sites est modifiée. En pratique, le site dont le poids est maximal, par exemple $\rho_i$ (figure 9), est déplacé le long de son arête duale en se rapprochant de son quadrilatère de contrainte jusqu'à ce que le plan radical $\Gamma_{ij}$ soit situé entre les sites $\rho_i$ et $\rho_j$.

- L'algorithme de correction de l'ensemble des sites est itératif et consiste à :

1. Initialiser le nombre de corrections $n$ à zéro

2. Pour chaque site de la cavité $(P_i, \omega_i)$, rechercher l'ensemble des sites $(P_j, \omega_j)$, $j \neq i$ tels que $\left\| \overrightarrow{P_i P_j} \right\|^2 \leq \omega_i^2$ en utilisant un *"bucket sorting"*.

3. Pour chaque couple de sites $((P_i, \omega_i), (P_j, \omega_j))$, calculer la différence $\left| \omega_i^2 - \omega_j^2 \right|^2$ Si cette différence est supérieure à $\left\| \overrightarrow{P_i P_j} \right\|^2$, le plan radical n'est pas situé entre $P_i$ et $P_j$ ; une correction doit donc être faite (on incrémente $n$). Si nous notons $(P, \omega)$ le site ayant le poids maximal, la correction consiste à déplacer $P$ le long de son arête duale en le rapprochant de son quadrilatère de contrainte d'une distance de 10% ($\omega$ étant mis à jour par la même occasion)

4. Si $n > 0$, retourner en 1.

A la fin de cet algorithme, chaque site de la cavité a été testé au moins une fois avec ses sites voisins et certains d'entre eux ont été corrigés. La nouvelle configuration spatiale des sites est maintenant admissible au sens des volumes finis et le diagramme de puissance associé est auto-centré.

**• La construction du diagramme de puissance des sites**

La troisième et dernière étape de la construction automatique du maillage de transition consiste à construire le diagramme de puissance des sites de la cavité. L'ensemble de sites internes et externes à la cavité a été défini de façon à garantir l'existence théorique d'un diagramme de puissance orthogonal et auto-centré.

La génération de ce diagramme de puissance est basée sur la triangulation régulière 3D de l'ensemble des sites de la cavité à l'aide d'une méthode incrémentale réduite.

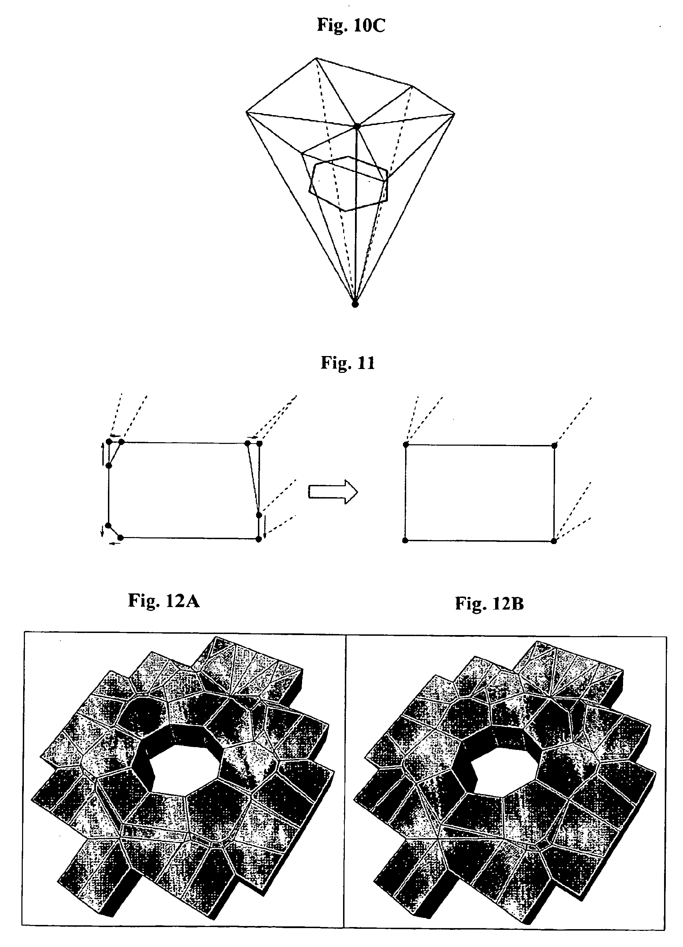

A partir des tétraèdres issus de la triangulation régulière des sites, le dual peut être construit pour former ainsi le diagramme de puissance cherché. En particulier, le fait que les faces des cellules ont une puissance égale vis à vis des deux sites qu'elles séparent est utilisé pour ainsi définir les plans radicaux des arêtes de la triangulation. Autrement dit, le diagramme de puissance cherché (ou plus exactement les faces de celui-ci) est obtenu en joignant les centres de puissance des tétraèdres appartenant à la coquille d'une même arête. Ceci est illustré par les figures 10A, 10B et 10C. La figure 10A illustre le diagramme de puissance en 2D issu de la triangulation régulière de la figure 10B. La figure 10C illustre la génération d'une face du diagramme de puissance en utilisant la dualité avec la triangulation régulière.

Le maillage de transition à générer se restreignant à la portion de l'espace délimitée par la cavité, seules les cellules de puissances des sites internes à la cavité sont construites.

Le diagramme de puissance orthogonal et auto-centré généré est théoriquement conforme aux quadrilatères de contrainte (si toutefois ceux-ci sont cosphériques et coplanaires). Cependant, dues aux imprécisions numériques et à la présence de certains quadrilatères non cocycliques sur la frontière des puits déviés, cette conformité n'est pas assurée. Il est donc nécessaire d'effectuer une étape supplémentaire dite de "correction" pour rendre conforme chaque cellule du maillage de transition.

Les problèmes de non-conformité pouvant être de différentes natures (erreurs numériques lors du calcul des coordonnées des sommets, présence de sommets ou de faces "parasites"), la méthode propose deux techniques pour effectuer la **correction du diagramme de puissance** dans le but d'assurer sa conformité :

Selon un premier mode de réalisation, la méthode comporte un algorithme efficace et robuste pour modifier les cellules de transition ainsi créées. Soit une cellule du maillage de transition $V$ et $\rho$ le site associé et soit $Q = \{Q_1 ... Q_n\}$ l'ensemble des quadrilatères de contrainte partagés par $\rho$. L'algorithme modifiant les faces et les sommets de la cellule $V$ pour que $V$ devienne conforme à $Q$ se présente de la manière suivante: Si $S_C = \{S_1 \ . \ . \ . S_m\}$ est l'ensemble des sommets des quadrilatères de contraintes associé à $V$ :

    1. On parcourt l'ensemble de faces de la cellule $V$ et on détermine $P_F = \{P_1 ... Pq\}$ l'ensemble des sommets des faces frontières (une face frontière est une face qui n'est partagée que par une seule cellule de transition) de $V$

    2. Pour chaque sommet $P \in P_F$, on détermine le sommet de contrainte $S$ le plus proche :

$$S = \left\{ S_i \in S_C, \left\| \overrightarrow{PS_i} \right\| \leq \left\| \overrightarrow{PS_j} \right\|, \forall S_j \in S_C, j \neq i \right\}$$

et on remplace $P$ par $S$ en utilisant un tableau de références. La substitution d'un sommet par un autre faisant intervenir un nombre quelconque de faces et de cellules de transition (cellule du maillage de transition), un tableau de références est utilisé pour propager les modifications à toutes ces entités. Un tableau d'entiers $Tref(1 : N)$ où $N$ est le nombre de sommets du maillage de transition est construit. Ce tableau est initialisé par : $Tref(i) \leftarrow i, \forall i$. Ainsi, pour substituer le sommet d'indice $p_0$ par le sommet d'indice $p_1$, on écrit $Tref(p_0) \leftarrow p_1$. L'obtention des nouvelles cellules modifiées se fait alors au niveau de la lecture des faces où les références des sommets doivent être prises au lieu de leurs indices.

En appliquant cet algorithme à l'ensemble des cellules du maillage de transition puis en mettant à jour l'ensemble de la structure de données (suppression des points multiples présents dans une même face et suppression des faces dont le nombre de sommet est inférieur à 3), on obtient un maillage de transition 100 % conforme.

La figure 11 illustre un exemple d'une cellule de transition rendue conforme par suppression de 5 sommets et de 3 faces.

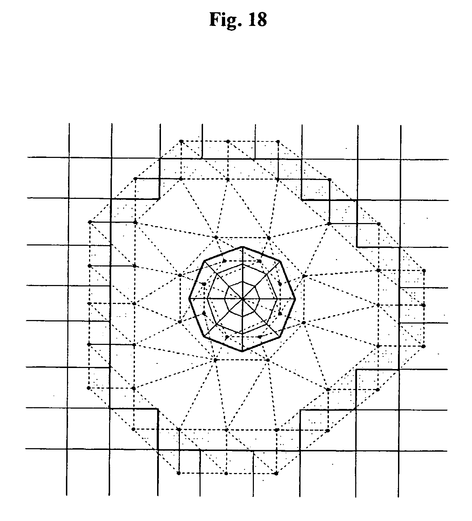

Selon un second mode de réalisation, la méthode permet de régler les problèmes de conformité au cours même de la construction du diagramme de puissance des sites internes à la cavité. Le principe repose sur le fait que les sommets de la cavité sont obtenus par les tétraèdres de la triangulation régulière formés par des sites internes et externes à la cavité (figure 18).

Lors de la construction du diagramme de puissance, on peut donc remplacer les centres des sphères de puissance de ces tétraèdres directement par les sommets de la cavité, ce qui évite les erreurs numériques décrites précédemment. Pour identifier ces sommets, on utilise les notions topologiques mises en places entre les sites et les quadrilatères de la cavité : chaque quadrilatère est associé à deux sites (un site interne et un site externe) et chaque site est associé à un (ou plusieurs) quadrilatère(s).

Plus précisément, pour chaque tétraèdre $i$ de la triangulation régulière, on compte le nombre de sommets qui sont des sites internes à la cavité. Si ce nombre de sommets est compris entre $1$ et $3$ (*i.e.* le tétraèdre est formé de sites internes et externes à la cavité), alors on recherche l'indice du sommet e de la cavité qui est commun aux quadrilatères associés aux quatre sites formant le tétraèdre en question. Le centre de la sphère circonscrite du tétraèdre $i$ est alors remplacé par le sommet de la cavité d'indice $e$.

L'algorithme suivant permet de réaliser ces substitutions :

Soit $nk$ le nombre de tétraèdres de la triangulation régulière des sites de la cavité et soit $Link(1 : nk)$ un tableau initialisé à $0$. La procédure qui suit permet de remplacer le centres des sphères de puissance de certains des tétraèdres de la triangulation régulière par les sommets de la cavité en modifiant le tableau $Link$ :

```
Procédure : RemplacerCentresTétraèdres()
pour i = 1 à nk faire
soit n = 0 ;
pour j = 1 à 4 faire
        si le sommet j du tétraèdre i est un site interne à la cavité faire
                n = n+1 ;
        fin si
fin pour
si 1 ≤ n ≤ 3 faire
        soit e l'indice du sommet de la cavité qui est commun aux quadrilatères de la cavité associés aux 4 sites
formant le tétraèdre i ;
        Link(i) = e ;
fin si

fin pour
```

En résultat, le centre de la sphère circonscrite à chaque tétraèdre est donné par le tableau $Link$. En particulier, si $Link(i) = 0$ alors le centre de la sphère de puissance du tétraèdre $i$ est égal à lui même. Sinon si $Link(i) = e$ (avec $e > 0$) alors le centre de la sphère de puissance du tétraèdre $i$ est égal au sommet $e$ de la cavité. Le centre de la sphère circonscrite du tétraèdre $i$ est alors remplacé par le sommet de la cavité d'indice e en utilisant le tableau $Link$.

Remarque : Dans les cas dégénérés où les puits sont très fortement déviés, il se peut que l'ensemble des quadrilatères associés aux quatre sites formant un tétraèdre donné n'aient pas de sommet commun. Dans ce cas, on remplace le centre de la sphère de puissance du tétraèdre en question par l'indice du sommet de ces quadrilatères le plus proche.

La construction du diagramme de puissance des sites internes à la cavité se fait alors via la méthode de construction décrite précédemment en utilisant le tableau $Link$ lorsque l'on accède au centre de la sphère circonscrite à un tétraèdre. Cela demande d'utiliser un tableau de coloriage dynamique pour éviter qu'un même sommet apparaisse plusieurs fois dans une même face et de vérifier que chaque face est constituée d'au moins trois sommets différents avant de la construire.

## 4. Optimisation des critères de qualité du maillage de transition sous contrôle de qualité et de validité au sens des volumes finis

Optimiser un maillage au regard d'un certain critère est une opération fréquemment pratiquée avec différents objectifs. Les applications d'une telle optimisation de maillage sont en effet nombreuses. En particulier, l'optimisation en tant que telle est intéressante car la qualité (la convergence des schémas, la précision des résultats) des solutions numériques associées aux noeuds d'un maillage dépend, à l'évidence, de la qualité de celui-ci. A ce titre, la méthode selon l'invention de génération de maillage comprend, en fin de processus, une étape d'optimisation qui consiste à améliorer la qualité du maillage.

**• Définition des critères de qualité du maillage hybride**

Dans la littérature, il existe de nombreux critères pour mesurer la qualité d'un triangle ou d'un tétraèdre mais il n'en existe pas qui soit véritablement adapté pour mesurer la qualité de cellules (ou mailles) polyédriques. Trois critères permettant de mesurer la qualité du maillage de transition, sont définis dans le cadre de l'invention :

**- un critère de qualité en forme $Q_F$**

La première mesure de qualité $Q_F$ d'une cellule $V$ est donnée par :

$$Q_F(V) = \min_{i=1,n}\left(\frac{l_i}{h}, \frac{h}{l_i}\right)$$

où $n$ est le nombre d'arête, $l_i$ est la longueur de la $i^{ème}$ arête de la cellule et $h$ est la longueur de référence associée à $V$. Cette longueur $h$ est égale à la longueur moyenne des arêtes de contrainte associées à $V$. Ces arêtes de contraintes sont les arêtes des quadrilatères de contrainte partagés par $V$. Cette qualité mesure parfaitement la forme ou l'aspect de l'élément en fonction des tailles de références du réservoir et du puits. On notera que sa valeur peut varier de 0, la cellule dégénérée ayant une arête nulle, à 1, la cellule polyédrique régulière.

**- un critère d'orthogonalité $Q_O$**

Ce critère permet de mesurer l'orthogonalité du maillage de transition en calculant l'angle (en degrés) défini entre le segment qui relie les sites de deux cellules voisines et le plan délimité par leur face commune. Si $F$ est une face polygonale, la mesure de son orthogonalité $Q_O$ est donnée par :

$$Q_O(F) = \arcsin\left|\overrightarrow{P_1P_2}.\vec{n}\right| * \frac{180}{\pi}$$

où $\bar{n}$ est la normale à la face et $P_1$ et $P_2$ sont les sites des deux cellules situées de part et d'autre de $F$. On notera que $Q_O$ varie de 0° pour une cellule dégénérée à 90° pour une cellule parfaitement orthogonale. L'orthogonalité $Q_O$ d'une cellule $V$ est alors définie par l'orthogonalité minimale de ses faces, elle s'exprime par :

$$Q_O(V) = \min_{F \in V} Q_O(F)$$

**- un critère de planarité $Q_P$**

Ce critère spécifique à la 3D est utilisé pour mesurer la planarité des faces du maillage de transition.
Soit $F$ la face définie par les sommets $\{A_1 \ldots A_{ns}\}$ et soit $G$ le barycentre de cette face. Si on décompose $F$ en $ns$ triangles $T_i = (G, A_i, A_{i+1})_{i=1..ns}$, la mesure de sa planarité $Q_P$ (en degrés) est donnée par :

$$Q_P(F) = \max_{i=1..ns}\left(ar\cos\left|\vec{n}.\overrightarrow{n_{T_i}}\right| * \frac{180}{\pi}\right)$$

où $\bar{n}$ est la normale à la face et $\bar{n}_{Ti}$ est la normale au triangle $T_i$.
On notera que $Q_P$ varie de 0° pour une face parfaitement plane à 90° pour une face dégénérée. La planarité $Q_P$ d'une cellule de transition V est alors définie par la planarité maximale de ses faces, elle s'exprime par :

$$Q_P(V) = \max_{F \in V} Q_P(V)$$

**Optimisation du maillage de transition**

Les maillages hybrides générés grâce à la méthode proposée comportent la plus part du temps de toutes petites arêtes et de toutes petites faces (dues à des problèmes numériques lorsqu'une arête est générée en joignant deux sommets au lieu d'un seul ou plus généralement à des problèmes inhérents aux diagrammes de puissance), ce qui engendre des résultats numériques de mauvaises qualités. La suppression des petites faces étant très difficile à mettre en place, la méthode d'optimisation consiste à supprimer les petites arêtes du maillage de transition sous contrôles de qualités fixés (les petites faces sont alors supprimées de manière implicite). Cette optimisation pouvant se faire au détriment d'autres critères (orthogonalité, planarité), nous introduisons trois contrôles qui nous permettent de valider la suppression d'une arête au sens des volumes finis :

- un contrôle d'orthogonalité : une cellule de transition est dite orthogonale si son orthogonalité $Q_O$ est supérieure ou égale à un seuil donné $\Omega_1$, fixé par défaut, spécifié par l'utilisateur ou issu d'un calcul.

- un contrôle de planarité : une cellule de transition est dite planaire si sa planarité $Q_P$ est inférieure ou égale à un seuil donné $\Omega_2$, fixé par défaut, spécifié par l'utilisateur ou issu d'un calcul.

- un contrôle d'auto-centrage : une cellule est dite auto-centrée si son site est à l'intérieur de celle-ci.

Pour améliorer la qualité du maillage de transition, deux étapes d'optimisation, pouvant être complémentaires, sont utilisées.

La première étape d'optimisation consiste à éliminer les petites arêtes du maillage de transition sous contrôle de qualité, d'orthogonalité, de planarité et d'auto-centrage. Cette élimination consiste dans un premier temps à supprimer le maximum de petites arêtes. Cette opération consiste à remplacer une arête [AB] par un point c en reconnectant ce dernier à tous les sommets auxquels elle était connectée. Cette opération aboutit toujours à une amélioration de la qualité en forme des cellules. Ensuite, certaines petites arêtes ne pouvant pas être détruites sous contrôle de qualité et de validité au sens des volumes finis, une étape supplémentaire est appliquée dans un deuxième temps : l'élimination consiste alors à dilater les arêtes qui n'ont pu être supprimées. La méthodologie adoptée consiste à agrandir la taille des petites arêtes pour améliorer la qualité en taille du maillage de transition. Cependant, du fait que la dilatation d'une arête [AB] peut se faire au détriment de la taille des autres arêtes incidentes à A ou B, on s'assure que la dilatation d'une arête s'accompagne d'une amélioration locale de la qualité en forme des cellules. La modification d'une arête entraînant une dégradation de l'orthogonalité et de la planarité des cellules environnantes, le processus utilisé est itératif et consiste à modifier en priorité les très petites arêtes jusqu'à un seuil fixé par défaut, spécifié par l'utilisateur ou issu d'un calcul.

Les simulations numériques étant de meilleure qualité lorsque les sites des cellules sont confondus avec leur centre de masse, nous effectuons une deuxième étape d'optimisation. Celle-ci consiste à déplacer les sites des cellules vers leur centre de masse, sous contrôle d'orthogonalité. Cette modification est mise en oeuvre par un processus itératif qui consiste à déplacer pas à pas l'ensemble des sites à chaque itération, pour éviter de bouger des sites trop brutalement.

La figure 12A illustre un maillage de transition avant optimisation et la figure 12B le même maillage après optimisation.

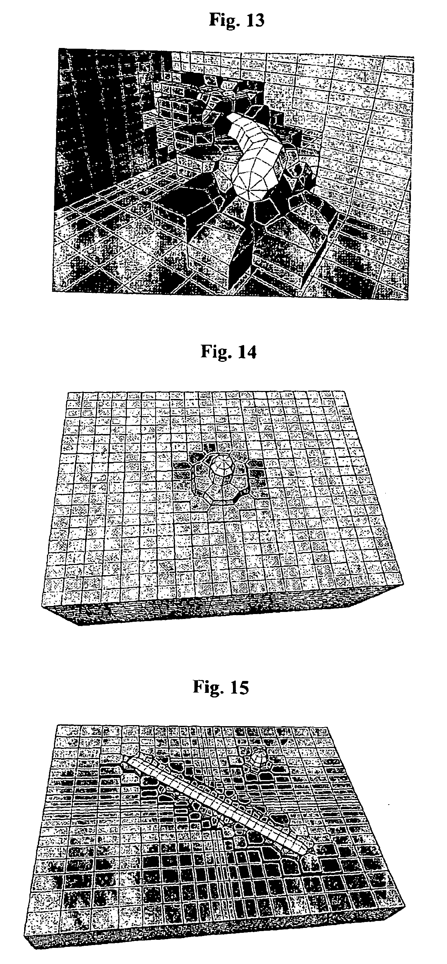

La figure 13 illustre un maillage de transition obtenue par la méthode.

**5. Résultats**

La méthode selon l'invention permettant de générer et d'optimiser des maillages hybrides en 3D a été présentée et illustrée. Cette partie se consacre à la présentation de résultats obtenus par la méthode. Ces résultats sont illustrés à travers une série de maillages hybrides en 3D obtenus pour différentes configurations.

Cas de puits rectilignes :

Un puits vertical de structure radial circulaire est inséré dans un maillage réservoir de type cartésien uniforme. Le résultat obtenu est illustré par la figure 14. Dans ce cas, de par la régularité de la grille réservoir, la structure en couronne du maillage de transition est particulièrement bien observable.

La seule restriction imposée sur la position du puits dans le réservoir est de ne pas choisir un emplacement trop proche du bord du réservoir. En effet, dans ce cas, il ne serait pas possible de définir une cavité et créer un maillage de transition. Cependant, géométriquement, si cela s'avérait nécessaire, le réservoir pourrait être prolongé artificiellement et la cavité créée à cheval sur le réservoir et son extension.

Cas d'un groupe de puits :

Jusqu'ici, un seul puits isolé était inséré dans le maillage de réservoir. Cependant, la méthode permet de prendre en compte plusieurs puits simultanément, y compris des puits déviés. L'insertion d'un groupe de puits dans un réservoir peut être envisagée de deux façons. La première consiste à insérer des puits éloignés les uns des autres. Dans ce cas, pour chaque puits on définit une cavité, comme l'illustre la figure 15.

La seconde façon d'insérer un groupe de puits dans un réservoir consiste à les prendre suffisamment rapprochés pour ne définir qu'une cavité unique autour de ces puits. Dans ce cas, la méthode s'applique et ne diffère que par la présence de plusieurs polyèdres frontières à l'intérieur d'un même polyèdre frontière délimitant les bords extérieurs de la cavité. La figure 16 illustre le cas d'un maillage hybride où le maillage de transition relie simultanément deux maillages de puits avec un maillage de réservoir.

La figure 16 illustre également le cas d'un maillage hybride généré à partir d'un réservoir de type cartésien non uniforme et de trois puits : un vertical, un dévié et un oblique.

On a considéré le cas où les deuxièmes maillages structurés étaient de type radial et formés autour de puits traversant le milieu, avec délimitation de cavités autour de chaque deuxième maillage pour y inclure un maillage de transition. Il est clair cependant que la méthode s'applique au maillage d'un milieu présentant d'autres types de discontinuité géométrique, tel que par exemple un gisement souterrain traversé par des fractures, ou des chenaux. Dans ce cas, les deuxièmes maillages structurés peuvent être de type CPG par exemple.

La méthode selon l'invention permet d'insérer un ou plusieurs maillage de puits dans un même maillage de réservoir. Aussi, lorsque deux ou plusieurs puits sont très proches, les cavités correspondantes peuvent fusionner et donner naissance à un unique maillage de transition.

Par ailleurs, lorsque l'espace entre deux maillages de puits n'est pas suffisant pour construire un maillage de transition conforme, certaines mailles de ces maillages de puits sont désactivées pour agrandir la taille de la cavité qui doit alors être de taille supérieure ou égal à $(\delta_1 + \delta_2)$ où $\delta_1$ et $\delta_2$ sont les tailles d'arêtes locales de ces deux puits.

**Revendications**

1.  Méthode pour générer un maillage hybride adapté à un milieu hétérogène traversé par au moins une discontinuité géométrique, dans le but de former un modèle représentatif d'écoulements de fluides dans ce milieu en accord avec un schéma numérique défini, comportant la formation d'au moins un premier maillage structuré pour mailler au moins une partie du milieu hétérogène, la formation d'au moins un deuxième maillage structuré pour mailler au moins une partie de ladite discontinuité géométrique, la formation d'au moins une cavité autour du second maillage et la formation d'au moins un maillage de transition non structuré assurant la transition entre les maillages structurés, cette méthode étant **caractérisée en ce que** ledit maillage hybride est généré en trois dimensions et **en ce qu'**elle comporte les étapes suivantes :

    a) on construit ladite cavité permettant audit maillage de transition de conserver une taille de maille intermédiaire entre la taille des mailles dudit premier maillage et la taille dudit deuxième maillage en réalisant les étapes suivantes :

    - on dilate ladite discontinuité géométrique par utilisation d'un coefficient de dilatation locale ($\alpha$) défini en fonction d'au moins un des paramètres suivants : paramètres de description de la discontinuité, paramètres de description dudit deuxième maillage et paramètres lié à la taille d'arête locale dudit premier maillage;
    - on détermine les mailles dudit premier maillage qui intersectent l'image de ladite discontinuité géométrique dilatée ;
    - on définit les limites de ladite cavité en affectant des sites à des quadrilatères frontières de la cavité ;

    b) on construit ledit maillage de transition s'appuyant sur lesdits quadrilatères frontières de la cavité, en construisant une triangulation régulière respectant au moins une des contraintes d'admissibilité au sens dudit schéma suivantes : conformité, convexité, orthogonalité et auto-centrage de ces mailles ;
    c) on optimise ledit maillage hybride obtenu, en réalisant au moins l'une des étapes suivantes:

- on supprime des petites arêtes de taille inférieure à une valeur dépendant d'au moins un paramètre global (δ) et d'au moins un paramètre local ($h_i$), par suppression et/ou dilatation de ces arêtes sous contrôle de critères de qualité au sens dudit schéma numérique, pour améliorer la régularité en forme dudit maillage hybride;
- on déplace des sites de la cavité vers leur centre de masse sous contrôle de critères de qualité au sens dudit schéma numérique.

**2.** Méthode selon la revendication 1, dans laquelle les contrôles de critères de qualité sont définis de la façon suivante :

- contrôle d'orthogonalité : une cellule de transition est dite orthogonale si son orthogonalité est supérieure ou égale à un seuil fixé ;
- contrôle de planarité : une cellule de transition est dite planaire si sa planarité est inférieure ou égale à un seuil fixé ;
- contrôle d'auto-centrage : une cellule est dite auto-centrée si son site est à l'intérieur de celle-ci.

**3.** Méthode selon l'une des revendications précédentes, dans laquelle on détermine les mailles du premier maillage qui intersectent l'image de ladite discontinuité géométrique dilatée en déterminant une première cellule dudit premier maillage qui se trouve dans l'image de la discontinuité dilatée, puis en étendant la cavité en parcourant par adjacence ses mailles voisines de manière itérative.

**4.** Méthode selon la revendication 3, dans laquelle on détermine ladite première cellule en utilisant une méthode de recherche par « bucket sorting ».

**5.** Méthode selon l'une des revendications précédentes, dans laquelle on lisse ladite cavité avant de définir ses limites.

**6.** Méthode selon la revendication 1, **caractérisée en ce que** la construction du maillage de transition comporte les étapes suivantes :

- on définit un site interne et un site externe pour chaque quadrilatère frontière de la cavité, en définissant un point de discrétisation de l'espace P et un poids ω pour chacun desdits sites ;
- on corrige les sites de ladite cavité de façon à obtenir, pour le maillage de transition, des cellules non-vides et auto-centrées ;
- on construit le diagramme de puissance desdits sites de la cavité en assurant la conformité dudit maillage hybride.

**7.** Méthode selon la revendication 6, dans laquelle lesdits sites sont définis à partir d'une triangulation de Delaunay des sommets de la cavité.

**8.** Méthode selon la revendication 6, dans laquelle lesdits sites sont définis à partir d'une évaluation des barycentres des sphères circonscrites des mailles partageant au moins une face avec la frontière de ladite cavité.

**9.** Méthode selon la revendication 6, dans laquelle lesdits sites sont définis à partir d'une évaluation des centres des sphères circonscrites des mailles partageant au moins une face avec la frontière de ladite cavité.

**10.** Méthode selon la revendication 9, dans laquelle l'évaluation du centre de la sphère circonscrite comporte les étapes suivantes pour une maille partageant au moins une face avec la frontière de ladite cavité :

- on effectue une estimation du centre de la sphère de ladite maille en déterminant un point de l'espace passant au plus près des huit sommets de ladite maille, par une approximation au sens des moindres carrés ;
- on détermine le point de discrétisation P associé au site, en déplaçant itérativement dans l'espace ledit centre, pour minimiser une distance maximale entre ledit centre et chacun des sommets de la face de ladite maille partagée avec ladite cavité ;
- on définit le poids ω associé à chaque site de la cavité en définissant ω comme étant la distance moyenne de P à chacun des sommets de la face de ladite maille partagée avec ladite cavité.

**11.** Méthode selon la revendication 6, dans laquelle on construit le diagramme de puissance des sites à partir de tétraèdres issus d'une triangulation régulière en trois dimensions de l'ensemble des sites de la cavité.

**12.** Méthode selon la revendication 6, dans laquelle on corrige ledit diagramme de puissance afin d'obtenir un maillage hybride conforme en remplaçant les sommets des mailles du maillage de transition appartenant à une face frontière par le sommet de contrainte des quadrilatères frontières le plus proche.

**13.** Méthode selon la revendication 6, dans laquelle la construction dudit diagramme de puissance comporte les étapes suivantes :

- on effectue une détermination de tétraèdres formés de sites internes et externes à la cavité ;
- on remplace, au cours de la construction dudit diagramme de puissance, les centres de sphères circonscrites à ces tétraèdres par un sommet de la cavité commun aux quadrilatères associés aux quatre sites formant le tétraèdre en question.

**14.** Méthode selon la revendication 7, dans laquelle la triangulation de Delaunay est réalisée par une méthode incrémentale.

**15.** Méthode selon la revendication 11, dans laquelle la triangulation régulière est réalisée par une méthode incrémentale.

**16.** Méthode selon l'une des revendications l'une des revendications précédentes, **caractérisée en ce que** les critères de qualité au sens dudit schéma numérique sont des critères de qualités applicables à des mailles polyédriques.

**17.** Méthode selon l'une des revendications précédentes, dans laquelle ledit schéma numérique comporte une approximation des écoulements de fluides à deux points.

**18.** Méthode selon l'une des revendications précédentes, dans laquelle ledit schéma numérique est de type volumes finis.

**19.** Méthode selon l'une des revendications précédentes, dans laquelle ladite discontinuité géométrique est un puits, et en ce que ledit deuxième maillage structuré est de type radial circulaire.

**20.** Méthode selon l'une des revendications précédentes, dans laquelle ladite discontinuité géométrique est une fracture, et en ce que ledit deuxième maillage structuré est de type CPG.

**21.** Méthode selon l'une des revendications précédentes, dans laquelle ledit premier maillage est de type cartésien non uniforme à mailles parallélépipédiques.

**22.** Méthode selon l'une des revendications précédentes, dans laquelle ledit maillage non structuré de transition est composé de mailles polyédriques convexes s'appuyant sur des quadrilatères frontières de ladite cavité.

**Claims**

**1.** A method of generating a hybrid grid suited to a heterogeneous medium traversed by at least one geometric discontinuity, in order to form a model representative of fluid flows in this medium in accordance with a defined numerical scheme, comprising forming at least a first structured grid for gridding at least part of the heterogeneous medium, forming at least a second structured grid for gridding at least part of said geometric discontinuity, forming at least one cavity around the second grid and forming at least one unstructured transition grid providing transition between the structured grids, this method being **characterized in that** said hybrid grid is generated in three dimensions and **in that** it comprises the following stages:

a) constructing said cavity allowing said transition grid to keep an intermediate cell size between the size of the cells of said first grid and the size of said second grid by carrying out the following stages:

- expanding said geometric discontinuity using a local expansion coefficient ($\alpha$) defined as a function of at least one of the following parameters: discontinuity description parameters, description parameters of said second grid and parameters linked with the local edge size of said first grid,
- determining the cells of said first grid that intersect the image of said expanded geometric discontinuity,
- defining the limits of said cavity by assigning sites to boundary quadrilaterals of the cavity,

b) constructing said transition grid resting on said boundary quadrilaterals of the cavity by constructing a regular triangulation meeting at least one of the following admissibility constraints in the sense of said scheme: conformity, convexity, orthogonality and self-centering of these cells,

c) optimizing said hybrid grid obtained by carrying out at least one of the following stages:

- eliminating small edges of a size below a value depending on at least one global parameter ($\delta$) and on at least one local parameter ($h_i$), by elimination and/or expansion of these edges under control of quality criteria in the sense of said numerical scheme, in order to improve the shape regularity of said hybrid grid,
- displacing the sites of the cavity towards their centre of mass under control of quality criteria in the sense of said numerical scheme.

2. A method as claimed in claim 1, wherein the quality criteria controls are defined as follows:

- orthogonality control: a transition cell is referred to as orthogonal if its orthogonality is greater than or equal to a fixed threshold,
- planarity control: a transition cell is referred to as planar if its planarity is less than or equal to a fixed threshold,
- self-centering control: a cell is referred to as self-centered if its site is within it.

3. A method as claimed in any one of the previous claims, wherein the cells of the first grid that intersect the image of said expanded geometric discontinuity are determined by determining a first cell of said first grid that is in the image of the expanded discontinuity, then by extending the cavity by searching by adjacency its neighbouring cells iteratively.

4. A method as claimed in claim 3, wherein said first cell is determined using a bucket sort type method.

5. A method as claimed in any one of the previous claims, wherein said cavity is smoothed prior to defining its limits.

6. A method as claimed in claim 1, **characterized in that** construction of the transition grid comprises the following stages:

- defining an internal site and an external site for each boundary quadrilateral of the cavity, by defining a discretization point $P$ of the space and a weight $\omega$ for each one of said sites,
- correcting the sites of said cavity so as to obtain, for the transition grid, non-empty and self-centered cells,
- constructing the power diagram of said sites of the cavity by ensuring the conformity of said hybrid grid.

7. A method as claimed in claim 6, wherein said sites are defined from a Delaunay triangulation of the vertices of the cavity.

8. A method as claimed in claim 6, wherein said sites are defined from an evaluation of the barycentres of the circumscribed spheres of the cells sharing at least one side with the boundary of said cavity.

9. A method as claimed in claim 6, wherein said sites are defined from an evaluation of the centres of the circumscribed spheres of the cells sharing at least one side with the boundary of said cavity.

10. A method as claimed in claim 9, wherein evaluation of the centre of the circumscribed sphere comprises the following stages for a cell sharing at least one side with the boundary of said cavity:

- carrying out an estimation of the centre of the sphere of said cell by determining a point in space passing the closest to the eight vertices of said cell, by an approximation in the least squares sense,
- determining discretization point P associated with the site, by displacing iteratively in the space said centre, so as to minimize a maximum distance between said centre and each of the vertices of the side of said cell shared with said cavity,
- defining weight $\omega$ associated with each site of the cavity by defining $\omega$ as the mean distance from P to each vertex of the side of said cell shared with said cavity.

11. A method as claimed in claim 6, wherein the power diagram of the sites is constructed from tetrahedrons resulting from a three-dimensional regular triangulation of all the sites of the cavity.

12. A method as claimed in claim 6, wherein said power diagram is corrected in order to obtain a conforming hybrid grid by replacing the vertices of the cells of the transition grid belonging to a boundary side by the closest constraint vertex of the boundary quadrilaterals.

13. A method as claimed in claim 6, wherein construction of said power diagram comprises the following stages:

   - performing a determination of tetrahedrons made up of sites internal and external to the cavity,
   - replacing, during construction of said power diagram, the centres of spheres circumscribed about these tetrahedrons by a vertex of the cavity common to the quadrilaterals associated with the four sites forming the tetrahedron in question.

14. A method as claimed in claim 7, wherein the Delaunay triangulation is carried out by means of an incremental method.

15. A method as claimed in claim 11, wherein the regular triangulation is carried out by means of an incremental method.

16. A method as claimed in any one of the previous claims, **characterized in that** the quality criteria in the sense of said numerical scheme are quality criteria applicable to polyhedral cells.

17. A method as claimed in any one of the previous claims, wherein said numerical scheme comprises a two-point approximation of the fluid flows.

18. A method as claimed in any one of the previous claims, wherein said numerical scheme is of finite volume type.

19. A method as claimed in any one of the previous claims, wherein said geometric discontinuity is a well and in that said second structured grid is of circular radial type.

20. A method as claimed in any one of the previous claims, wherein said geometric discontinuity is a fracture and in that said second structured grid is of CPG type.

21. A method as claimed in any one of the previous claims, wherein said first grid is of non-uniform Cartesian type with parallelepipedic cells.

22. A method as claimed in any one of the previous claims, wherein said unstructured transition grid consists of convex polyhedral cells resting on boundary quadrilaterals of said cavity.


**Patentansprüche**

1. Verfahren zum Generieren eines hybriden Gitters, das an eine heterogene Umgebung angepasst ist, die von mindestens einer geometrischen Diskontinuität durchquert wird, mit dem Ziel des Bildens eines repräsentativen Fluidströmungsmodells in dieser Umgebung in Übereinstimmung mit einem definierten numerischen Schema, umfassend das Bilden von zumindest einem ersten strukturierten Gitter zur Gitterdarstellung von zumindest einem Teil der heterogenen Umgebung, das Bilden von zumindest einem zweiten strukturierten Gitter zur Gitterdarstellung von zumindest einem Teil der geometrischen Diskontinuität, das Bilden von zumindest einem Hohlraum um das zweite Gitter und das Bilden von zumindest einem unstrukturierten Übergangsgitter, das den Übergang zwischen den strukturierten Gittern gewährleistet, wobei das Verfahren **dadurch gekennzeichnet ist, dass** das hybride Gitter in drei Dimensionen generiert wird, und dass es die folgenden Schritte umfasst:

   a) das Konstruieren des Hohlraums, wobei es dem Übergangsgitter ermöglicht ist, eine Maschengröße beizubehalten, die zwischen der Größe der Maschen des ersten Gitters und der Größe, des zweiten Gitters liegt, indem die folgenden Schritte ausgeführt werden:

      - das Ausweiten der geometrischen Diskontinuität durch die Verwendung eines lokalen Ausweitungskoeffizienten ($\alpha$), der in Abhängigkeit von zumindest einem der folgenden Parameter definiert ist: Beschreibungsparameter der Diskontinuität, Beschreibungsparameter des zweiten Gitters und Parameter, die mit der lokalen Kantengröße des ersten Gitters in Zusammenhang stehen;
      - das Bestimmen der Maschen des ersten Gitters, die das Bild der ausgeweiteten geometrischen Diskontinuität schneiden;
      - das Definieren der Grenzen des Hohlraums durch Zuweisen von Stellen an Grenzvierecke des Hohlraums;

b) das Konstruieren des Übergangsgitters sich stützend auf die Grenzvierecke des Hohlraums, indem unter Berücksichtigung von zumindest einer der folgenden Zulässigkeits-Bedingungen im Sinne des Schemas eine reguläre Triangulation konstruiert wird: Konformität, Konvexität, Orthogonalität und Autozentrierung der Maschen;

c) das Optimieren des erhaltenen hybriden Gitters durch Ausführen von zumindest einem der folgenden Schritte:

- das Beseitigen kleiner Kanten von einer Größe, die kleiner ist als ein Wert, abhängig von zumindest einem globalen Parameter ($\delta$) und zumindest einem lokalen Parameter ($h_i$), durch Beseitigen und/oder Ausweiten dieser Kanten unter Kontrolle von Qualitätskriterien in Sinne des numerischen Schemas, um die Regelmäßigkeit der Form des hybriden Gitters zu verbessern;
- das Verschieben von Stellen des Hohlraums hin zu ihrem Massenmittelpunkt unter Kontrolle von Qualitätskriterien in Sinne des numerischen Schemas.

2. Verfahren nach Anspruch 1, worin die Kontrollen der Qualitätskriterien wie folgt definiert sind:

- Orthogonalitätskontrolle: eine Übergangszelle gilt als orthogonal, wenn ihre Orthogonalität gleich einem festgelegten Schwellenwert ist oder darüber liegt;
- Planaritätskontrolle: eine Übergangszelle gilt als planar, wenn ihre Planarität gleich einem festgelegten Schwellenwert ist oder darunter liegt;
- Autozentrierungskontrolle: eine Zelle gilt als autozentriert, wenn ihre Stelle im Innern dieser ist.

3. Verfahren nach einem der vorangegangenen Ansprüche, worin die Maschen des ersten Gitters, die das Bild der ausgeweiteten geometrischen Diskontinuität schneiden, bestimmt werden, indem eine erste Zelle des ersten Gitters bestimmt wird, die sich im Bild der ausgeweiteten Diskontinuität befindet, und dann der Hohlraum erweitert wird, indem durch Adjazenz seine benachbarten Maschen iterativ durchlaufen werden.

4. Verfahren nach Anspruch 3, worin die erste Zelle unter Verwendung eines "Bucketsorting"-Suchverfahrens bestimmt wird.

5. Verfahren nach einem der vorangegangenen Ansprüche, worin der Hohlraum geglättet wird, bevor seine Grenzen definiert werden.

6. Verfahren nach Anspruch 1, **dadurch gekennzeichnet, dass** die Konstruktion des Übergangsgitters die folgenden Schritte umfasst:

- das Definieren einer inneren Stelle und einer äußeren Stelle für jedes Grenzviereck des Hohlraums, wobei ein Diskretisierungspunkt des Raums P und ein Gewicht $\omega$ für jede der Stellen definiert wird;
- das Korrigieren der Stellen des Hohlraums, um für das Übergangsgitter nicht-leere und autozentrierte Zellen zur erhalten;
- das Konstruieren des Leistungsdiagramms der Stellen des Hohlraums, wobei die Konformität des hybriden Gitters sichergestellt ist.

7. Verfahren nach Anspruch 6, worin die Stellen ausgehend von einer Delaunay-Triangulation der Eckpunkte des Hohlraums definiert werden.

8. Verfahren nach Anspruch 6, worin die Stellen ausgehend von einer Ermittlung der Baryzentren der Umkugeln der Maschen, die mindestens eine Fläche mit der Grenze des Hohlraums teilen, definiert werden.

9. Verfahren nach Anspruch 6, worin die Stellen ausgehend von einer Ermittlung der Mittelpunkte der Umkugeln der Maschen, die mindestens eine Fläche mit der Grenze des Hohlraums teilen, definiert werden.

10. Verfahren nach Anspruch 9, worin die Ermittlung des Mittelpunkts der Umkugel für eine Masche, die mindestens eine Fläche mit der Grenze des Hohlraums teilt, die folgenden Schritte umfasst:

- das Ausführen einer Schätzung des Mittelpunkts der Kugel der Masche durch Bestimmen eines Punkts des Raums, der am nächsten an die acht Eckpunkte der Masche kommt, durch eine Approximation im Sinne der kleinsten Quadrate;
- das Bestimmen des Diskretisierungspunkts P, der der Stelle zugeordnet ist, durch iteratives Verschieben des Mittelpunkts im Raum, um eine Maximaldistanz zwischen dem Mittelpunkt und jedem der Eckpunkte der Fläche der Masche, die mit dem Hohlraum geteilt ist, zu minimieren;

- das Definieren des Gewichts $\omega$, das jeder Stelle des Hohlraums zugeordnet ist, indem $\omega$ als mittlere Distanz von P zu jedem der Eckpunkte der Fläche der Masche, die mit dem Hohlraum geteilt ist, definiert wird.

11. Verfahren nach Anspruch 6, worin das Leistungsdiagramm der Stellen ausgehend von Tetraedern konstruiert wird, die aus einer regulären Triangulation in drei Dimensionen der Gesamtheit der Stellen des Hohlraums hervorgegangen sind.

12. Verfahren nach Anspruch 6, worin das Leistungsdiagramm korrigiert wird, um ein konformes hybrides Gitter zu erhalten, indem die Eckpunkte der Maschen des Übergangsgitters, die zu einer Grenzfläche gehören, durch den Bedingungs-Eckpunkt der nächstgelegenen Grenzvierecke ersetzt werden.

13. Verfahren nach Anspruch 6, worin die Konstruktion des Leistungsdiagramms die folgenden Schritte umfasst:

- das Ausführen einer Bestimmung der Tetraeder, die von inneren und äußeren Stellen des Hohlraums gebildet sind;
- das Ersetzen, im Zuge der Konstruktion des Leistungsdiagramms, der Umkugelmittelpunkte dieser Tetraeder durch einen Eckpunkt des Hohlraums, der den Vierecken gemeinsam ist, die den vier Stellen zugeordnet sind, die das betreffende Tetraeder bilden.

14. Verfahren nach Anspruch 7, worin die Delaunay-Triangulation mit einem inkrementellen Verfahren ausgeführt wird.

15. Verfahren nach Anspruch 11, worin die reguläre Triangulation mit einem inkrementellen Verfahren ausgeführt wird.

16. Verfahren nach einem der vorangegangenen Ansprüche, **dadurch gekennzeichnet, dass** die Qualitätskriterien im Sinne des numerischen Schemas auf Polyedermaschen anwendbare Qualitätskriterien sind.

17. Verfahren nach einem der vorangegangenen Ansprüche, worin das numerische Schema eine Approximation der Fluidströmungen an zwei Punkten umfasst.

18. Verfahren nach einem der vorangegangenen Ansprüche, worin das numerische Schema vom Finite-Volumen-Typ ist.

19. Verfahren nach einem der vorangegangenen Ansprüche, worin die geometrische Diskontinuität ein Bohrloch ist und worin das zweite strukturierte Gitter vom kreisförmig-radialen Typ ist.

20. Verfahren nach einem der vorangegangenen Ansprüche, worin die geometrische Diskontinuität ein Bruch ist und worin das zweite strukturierte Gitter vom Typ CPG ist.

21. Verfahren nach einem der vorangegangenen Ansprüche, worin das erste Gitter vom Typ nicht-uniformes kartesisches Gitter mit parallelepipedförmigen Maschen ist.

22. Verfahren nach einem der vorangegangenen Ansprüche, worin das unstrukturierte Übergangsgitter aus konvexen Polyedermaschen besteht, die sich auf Grenzvierecken des Hohlraums stützen.

Fig. 1

Fig. 2

**Fig. 3A**

**Fig. 3B**

**Fig. 4**

Fig. 5A

Fig. 5B

Fig. 5C

**Fig. 6**

**Fig. 7**

**Fig. 8**

**Fig. 9**

**Fig. 10A**

**Fig. 10B**

**Fig. 10C**

**Fig. 11**

**Fig. 12A**

**Fig. 12B**

**Fig. 13**

**Fig. 14**

**Fig. 15**

## Fig. 16

## Fig. 17

**Fig. 18**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2747490
- US 5844564 A
- FR 2802324
- FR 2801710

**Littérature non-brevet citée dans la description**

- **Z.E. HEINEMANN ; G.F. HEINEMANN ; B.M. TRANTA.** Modelling heavily faulted reservoirs. *Proceedings of SPE Annual Technical Conferences,* 1998, 9-19
- **O.A. PEDROSA ; K. AZIZ.** Use of hybrid grid in reservoir simulation. *Proceedings of SPE Middle East Oil Technical Conference,* Mars 1985, 99-112
- **S. KOCBERBER.** An automatic, unstructured control volume generation system for geologically complex reservoirs. *Proceedings of the 14th SPE symposium on Reservoir Simulation,* Juin 1997, 241, 252
- **P.J. FREY ; P.L. GEORGE.** Maillages : applications aux éléments finis. *Hermes,* 1999
- **P.L. GEORGE ; H. BOROUCHAKI.** Triangulation de Delaunay et maillage. *Hermes,* 1997